# EUROPÄISCHE PATENTSCHRIFT

(11) **EP 3 434 382 B1**
(45) Veröffentlichungstag und Bekanntmachung des Hinweises auf die Patenterteilung: **11.09.2019**
(21) Anmeldenummer: 17183498.9
(22) Anmeldetag: 27.07.2017
(51) Int. Cl.: B09B 3/00, C02F 11/08, C02F 11/18, C05F 3/00, C05F 7/00, C05F 9/00

(54) **FRAKTIONIERTE ABSCHEIDUNG VON WERTSTOFFEN AUS WÄSSRIGEN VIELKOMPONENTENGEMISCHEN**
FRACTIONAL DEPOSITION OF VALUABLE SUBSTANCES FROM AQUEOUS MULTI-COMPONENT MIXTURES
SÉPARATION FRACTIONNÉE DE MATIÈRES À PARTIR DE MÉLANGES DE PLUSIEURS COMPOSANTS AQUEUX

(43) Veröffentlichungstag der Anmeldung: 30.01.2019
(73) Patentinhaber: iGas energy GmbH, 52222 Stolberg (DE)
(72) Erfinder: Lentz, Karl-Heinz, 52222 Stolberg (DE)
(74) Vertreter: Meinken, Claudia

(56) Entgegenhaltungen:
- WO-A2-2004/087619
- US-A1- 2004 192 980

## Beschreibung

Die Erfindung betrifft Verfahren zur fraktionierten Abscheidung von Wertstoffen aus wässrigen Vielkomponentengemischen wie wässrigen Abfällen, Schlämmen und Klärschlamm unter überkritischen Bedingungen. Die Erfindung umfasst auch Wertstofffraktionen, die nach dem erfindungsgemäßen Verfahren angereichert werden, insbesondere phosphorhaltige und phosphor- und ammoniumhaltige Verbindungen wie Dünger und Synthesegas als Energiequelle und als Wertstoff für die chemische Industrie. Mit dem erfindungsgemäßen Verfahren können Wertstoffe vollständig aus Abfällen, Schlämmen und Klärschlamm zurückgewonnen und einer neuen Verwendung zugeführt werden. Insbesondere eignen sich die Verfahren zur Rückgewinnung von Phosphor und Ammonium in Form von pflanzenverfügbarem Dünger, zur Rückgewinnung von Metallen und Schwermetallen und zur Herstellung von Synthesegas und zur Gewinnung von Wasserstoff aus Synthesegas, z.B. für die Mobilität.

Wässrige Vielkomponentengemische wie sie beispielswiese als Klärschlamm anfallen, enthalten eine Vielzahl von Wertstoffen, unter anderem Metalle, Sand, Schwermetalle und Phosphor und Stickstoff.

Phosphor ist ein lebensnotwendiger Stoff für Pflanzen und Tiere und ein wichtiger Bestandteil von Düngemitteln für die Nahrungsmittelerzeugung und in der Landwirtschaft. Dabei sind die weltweiten Phosphorvorkommen beschränkt. Zunehmend wird deshalb versucht, Phosphor aus wässrigen Abfällen und Klärschlamm zurückzugewinnen. Derzeit verbleibt Phosphat, das in der Landwirtschaft als Dünger eingesetzt wird, am Ende als Abfall in Form von Tiermehl, Klärschlamm oder Klärschlammasche. Ein direkter Einsatz von Tiermehl oder Klärschlamm als Düngemittel ist aufgrund der Schwermetallbelastung und aus hygienischen Gründen problematisch und ist deshalb verboten oder unterliegt strengen Auflagen. Viele Phosphate sind zudem schwer löslich und für Pflanzen nicht verfügbar. Es ist deshalb ein Ziel, den Phosphatkreislauf zu schließen und pflanzenverfügbare Phosphate aus kommunalen Abwässern, Klärschlamm, tierischen Abfallprodukten wie Tiermehl und industriellen Abfällen zurückzugewinnen.

Die Gewinnung von Magnesium-Ammonium-Phosphat (abgekürzt "MAP") aus Klärschlamm ist bekannt. Bei den bekannten Verfahren werden ausgefaulte Klärschlämme angesäuert und dann die feste Phase abgetrennt. Schwermetalle werden durch Zugabe von Sulfiden gefällt und die verbleibende Lösung mit Magnesiumchlorid versetzt, um pflanzenverfügbares MAP (MgNH₄PO₄ x 6 H₂O) zu gewinnen. Dabei ist das erhaltene MAP kein chemisch reines Produkt. Die MAPs unterschiedlicher Klärwerke unterscheiden sich beispielweise je nach Vorbehandlung der verwendeten Klärschlämme und den unterschiedlichen technischen Gegebenheiten in ihrer Zusammensetzung.

Ein Verfahren zur Gewinnung von Magnesium-Ammonium-Phosphat aus Klärschlamm ist in DE102007035910 beschrieben. Dabei wird zunächst aus Klärschlamm Faulschlamm hergestellt, dieser dann entgast und mit Luft vermischt. Durch Zugabe von Magnesiumchlorid wird MAP ausgefällt und durch einen Trichter im unteren Teil des Reaktors abgetrennt (sog. Berliner Pflanze®).

EP2429674 offenbart ein Verfahren zur Rückgewinnung von Phosphat aus Klärschlamm wobei aus Klärschlamm mit Wasser, Alkohol, Wasser/AlkoholGemisch oder wässriger Lösung eine Suspension hergestellt wird, gasförmiges Kohlendioxid oder überkritisches Kohlendioxid als Extraktionsmittel in die Suspension eingeleitet, ungelöste Feststoffe abgetrennt, Kohlendioxid entfernt und gelöste Phosphate ausgefällt und abgetrennt werden.

In DE19628009 ist ein Verfahren zum Eindampfen von wässrigen Salzlösungen, die bei der Herstellung von Mineraldüngergranulaten entstehen, in einem Wärmetauscher, in dem die Lösungen durch in getrennten Strömungswegen geführten Dampf erhitzt werden, beschrieben.

Daneben sind thermische und nasschemische Verfahren zur Aufarbeitung bzw. Entsorgung von industriellen und landwirtschaftlichen Abfällen bekannt. Darunter sind auch Verfahren, bei denen die Umsetzung unter überkritischen Bedingungen erfolgt.

DE10210178 offenbart die Umsetzung von verdünntem Traubentrester, mit einer Trockenmasse von 15%, mit überkritischem Wasser bei einer mittleren Temperatur von 650 Grad Celsius. Als Reaktionsprodukte werden dabei H₂, CO₂, CH₄ und N₂ erhalten, die mit dem überschüssigen Wasser eine homogene Phase bilden und im Wärmetauscher zur Aufheizung neuen Edukts verwendet werden. Die gebildeten anorganischen Salze werden aus dem Reaktorsumpf nach unten abgezogen und verworfen.

DE20220307U1 offenbart eine Anlage zur Durchführung eines entsprechenden Verfahrens mit zylinderförmigem Reaktor, der nicht mehr als 30 Grad gegen die Vertikale geneigt ist, mit Druckleitungen zur Zuführung von Edukt und zur Ableitung von Produkten und einem Sumpfabzug am unteren Ende des Reaktors.

DE102005037469 offenbart ein Verfahren zur Abscheidung von anorganischen Feststoffen aus einer wässrigen Lösung, die organische und anorganische Feststoffe enthält, mit den Schritten Erwärmung der wässrigen Lösung bei einem Druck zwischen 22,2 und 50 MPa in einem Wärmetauscher auf eine Temperatur unterhalb der pseudokritischen Temperatur (350 bis 600 Grad Celsius), Einbringen der erwärmten wässrigen Lösung in mindestens einen Abscheider, in dem die anorganischen Feststoffe aus der wässrigen Lösung abgeschieden werden, Führen der gereinigten wässrigen Lösung in einen Reaktor, in dem die wässrige Lösung bei einer Temperatur von 350 und 600 Grad Celsius behandelt wird. DE102005037469 offenbart ferner eine Vorrichtung zur Durchführung des Verfahrens umfassend einen Vorratstank 1, eine Pumpe 2, einen Wärmetauscher 3, mindestens einen Abscheider 4 und einen Reaktor 6.

Zur Aufarbeitung von nasser Biomasse offenbart DE102006044116 ein Verfahren zur hydrothermalen Vergasung der Biomasse in überkritischem Wasser bei einem Druck oberhalb von 22,1 MPa. Da nasse Biomasse wie z.B. frische Pflanzen oder Trester oft eine hohe Konzentration (etwa 30 Gew. %) an organischer Materie und damit verbunden eine hohe Viskosität aufweisen, lassen sich diese Abfälle schlecht pumpen. Deshalb wird in DE102006044116 nasse Biomasse mit Prozessabwasser auf 5-20 Gew. %, bezogen auf die organische Materie, verdünnt. Nach der hydrothermalen Vergasung werden aus den Reaktionsprodukten zunächst die anorganischen Salze und dann die Produktgase vom Prozessabwasser abgetrennt. Ein Teil des Prozessabwassers wird zur Verdünnung der nassen Biomasse verwendet während der andere Teil und die anorganischen Salze entsorgt werden.

DE10217165 offenbart ein Verfahren zur Behandlung von organischen Stoffen, wobei die organischen Stoffe in eine wässrige Phase eingebracht werden, so dass eine pumpfähige Phase erzeugt wird. Der Druck wird auf mindestens 221 bar und die Temperatur auf mindestens 374 Grad Celsius erhöht, die Phase in einen Durchflussreaktor eingebracht und Teilchen, die eine Minimalgröße überschreiten, aus dem Produktstrom entfernt. Mindestens 50 % des Produktstroms werden in den Reaktor zurückgeführt.

DE3885762 betrifft ein Verfahren zum Behandeln von Wasser, das organisches und anorganisches Material umfasst, unter überkritischen Bedingungen und das Abtrennen der gebildeten Feststoffe.

DE10135431 nennt ein Verfahren zur Vorbehandlung von Reaktoren zur Wasserstofferzeugung, wobei der Wasserstoff aus der Reaktion von organischen Verbindungen mit überkritischem Wasser erzeugt wird.

DE29913370 offenbart eine Anlage zur Behandlung von Feststoffen in überkritischem Wasser im Reaktionsraum eines Reaktors.

DE19955150 betrifft ein Verfahren zur Erzeugung von Wasserstoff, bei dem Kohlenwasserstoffe und/oder Alkohole in überkritischem Wasser ohne Einsatz eines Katalysators umgesetzt werden.

DE19747696 beschreibt ein Verfahren zur Durchführung von chemischen Reaktionen in überkritischen wässrigen Systemen, bei dem eine oder mehrere Verbindungen in der Weise umsetzt werden, dass mindestens eine Säure eingesetzt oder freigesetzt wird und die Produkte der chemischen Reaktion unter den kritischen Zustand abgekühlt werden, wobei das Abkühlen durch Zugabe einer Lauge erfolgt.

DE29719196 offenbart einen Reaktor zur Durchführung von überkritischen Verfahren.

US 2004/192980 A1 offenbart ein Verfahren zur fraktionierten Abscheidung von Wertstoffen aus einen wässrigen Vielkomponentengemisch umfassend die Kompression und Erwärmung des Gemisches in zwei Stufen zur Abtrennung von zwei Wertstofffraktionen.

WO 2004/087619 A2 offenbart ein mehrstufiges Verfahren und eine Vorrichtung, die verschiedene Abfälle wie Innereien, Tierdünger, kommunalen Klärschlamm, Reifen und Kunststoffe, in Wertstoffe umwandelt.

Bei den bekannten Verfahren zur Aufarbeitung von Biomasse und Klärschlamm bleiben immer Rückstände, die entsorgt werden müssen. Verfahren, bei denen alle Bestandteile der Biomasse, Abfälle oder des Klärschlamms in Wertstoffe überführt und Wertstoffe vollständig zurückgewonnen werden können, sind im Stand der Technik nicht bekannt. Klärschlamme und Rückstände aus Klärschlammen werden häufig verbrannt. Die Klärschlammverbrennung produziert dabei so viel Ruß, wie die Verbrennung von Kohle. Wertvolle Wertstoffe gehen verloren.

Die Aufgabe der vorliegenden Erfindung war es, ein Verfahren zur Entsorgung von wässrigen Abfällen, insbesondere Klärschlamm zu entwickeln, bei dem wertvolle Stoffe (Wertstoffe), die in dem wässrigen Abfall enthalten sind, wie beispielsweise Phosphor, aus dem Abfall zurückgewonnen werden können.

Diese Aufgabe wird durch ein Verfahren nach den Ansprüchen 1 bis 9 gelöst. In dem Verfahren wird als Edukt ein wässriges Vielkomponentengemisch eingesetzt. Als Produkte werden Wertstofffraktionen und vorzugsweise Synthesegas und Wasser erhalten.

Die vorliegende Erfindung löst diese Aufgabe, indem ein Verfahren bereitgestellt wird, dass es ermöglicht, alle Bestandteile in wässrigen Vielkomponentengemischen wie Klärschlamm, vollständig in Wertstoffe zu überführen und die Wertstoffe in Fraktionen zurückzugewinnen. Aus den einzelnen Fraktionen können Wertstoffe einfach aufgearbeitet und in den Wertstoffkreislauf zurückgeführt werden. Das Verfahren ermöglich das Recycling und die Schonung von Rohstoffressourcen wie Phosphor.

Gegenstand der Erfindung ist ein Verfahren zur fraktionierten Abscheidung von Wertstoffen aus einem wässrigen Vielkomponentengemisch umfassend die Kompression des wässrigen Vielkomponentengemisches auf 25 bis 35 MPa, Erwärmung des komprimierten, wässrigen Vielkomponentengemisches auf 200 bis 300 Grad Celsius und Abtrennung einer ersten Wertstofffraktion 41, in der feste Stoffe angereichert sind,
weitere Erwärmung des komprimierten, wässrigen Vielkomponentengemisches auf 300 bis 400 Grad Celsius und Abtrennung einer zweiten Wertstofffraktion 42, in der Metallsalze angereichert sind,
weitere Erwärmung des komprimierten, wässrigen Vielkomponentengemisches auf 400 bis 550 Grad Celsius und Abtrennung einer dritten Wertstofffraktion 43, in der Phosphat und Ammonium angereichert sind.

Vor Abtrennung der dritten Wertstofffraktion 43 können bei der Temperatur von 400 bis 550 Grad Celsius ein oder mehrere Fällungsmittel wie Mg²⁺, Ca²⁺ und K⁺ zugesetzt werden. Eine Ausführungsform des Verfahrens zur fraktionierten Abscheidung von Wertstoffen aus einem wässrigen Vielkomponentengemisch umfasst die Kompression des wässrigen Vielkomponentengemisches auf 25 bis 35 MPa, Erwärmung des komprimierten, wässrigen Vielkomponentengemisches auf 200 bis 300 Grad Celsius und Abtrennung einer ersten Wertstofffraktion 41, weitere Erwärmung des komprimierten, wässrigen Vielkomponentengemisches auf 300 bis 400 Grad Celsius und Abtrennung einer zweiten Wertstofffraktion 42, weitere Erwärmung des Vielkomponentengemisches auf 400 bis 550 Grad Celsius und Zusatz von einem oder mehreren Fällungsmitteln wie Mg²⁺ und / oder Ca²⁺ und / oder K⁺ und Abtrennung einer dritten Wertstofffraktion 43. Die Abtrennung der ersten, zweiten und dritten Wertstofffraktion 41, 42, 43 erfolgt vorzugsweise jeweils durch Abscheider 5.

In der ersten Wertstofffraktion 41 sind feste Stoffe angereichert.

In der zweiten Wertstofffraktion 42 sind Metallsalze angereichert

In der dritten Wertstofffraktion 43 sind Phosphat und Ammonium angereichert.

Das Verfahren ist dadurch gekennzeichnet, dass das wässrige Vielkomponentengemisch nicht vorher entwässert oder getrocknet werden muss. Idealerweise weißt das wässrige Vielkomponentengemisch einen hohen Wasseranteil auf, beispielsweise mindestens 80 Gew. % Wasser, vorzugsweise mindestens 85 Gew. % Wasser, vorzugsweise mindestens 86 Gew. %, besonders bevorzugt 87 Gew. % bis 88 Gew. % Wasser. Dieser Wasseranteil ist die "optimale Konzentration". Vorzugsweise ist das wässrige Vielkomponentengemisch pumpfähig. Klärschlamm mit einem Wassergehalt von 75 Gew. % ist beispielsweise nicht mehr pumpfähig. Dieser Klärschlamm wird durch Prozessinternes Kreislaufwasser auf die gewünschte Konzentration verdünnt. Dies gilt für alle anderen Abfälle bzw. Abfallströme auch. In bevorzugten Ausführungsformen des Verfahrens wird das wässrige Vielkomponentengemisch durch eine Schneidevorrichtung 2 geleitet.

Das erfindungsgemäße Verfahren ist dadurch gekennzeichnet, dass die fraktionierte Abscheidung der Wertstoffe mit mindestens einer Pumpe 3, mindestens drei Abscheidern 5 und Ventilen 6 in einer geschlossenen Vorrichtung unter Sauerstoffausschluss durchgeführt wird.

Gegenstand der Erfindung ist ein Verfahren zur fraktionierten Abscheidung von Wertstoffen aus einem Edukt 31, insbesondere wässrigem Vielkomponentengemisch, umfassend das Einbringen aus einem Vorlagebehälter 1 in die Eduktleitung 12 und gegebenenfalls das Verdünnen oder das Eindicken des Edukts 31, vorzugsweise des wässrigen Vielkomponentengemisches, auf die optimale Konzentration, gegebenenfalls die Zerkleinerung von Komponenten in dem Edukt 31 (wässrigen Vielkomponentengemisch) beispielsweise mit einer Schneidevorrichtung 2,
Kompression auf 25 bis 35 MPa beispielsweise mit einer Pumpe 3 insbesondere Hochdruckpumpe, und Führung der Eduktleitung 12 durch einen Wärmetauscher 4 zur Erwärmung des komprimierten Edukts (komprimierten wässrigen Vielkomponentengemisches) auf 200 bis 300 Grad Celsius und Abtrennung der ersten abgeschiedenen Wertstofffraktion 41 beispielsweise mit einem Abscheider 5,
Führung der Eduktleitung 12 durch einen zweiten Wärmetauscher 4 zur Erwärmung des komprimierten Edukts (komprimierten wässrigen Vielkomponentengemisches) auf 300 bis 400 Grad Celsius und Abtrennung einer zweiten abgeschiedenen Wertstofffraktion 42 beispielsweise mit einem zweiten Abscheider 5,
Führung der Eduktleitung 12 durch einen dritten Wärmetauscher 4 zur Erwärmung des komprimierten Edukts (komprimierten wässrigen Vielkomponentengemisches) auf 400 bis 550 Grad Celsius und Abtrennung einer dritten abgeschiedenen Wertstofffraktion 43 beispielsweise mit einem dritten Abscheider 5.

Als Edukt 31 wird in dem erfindungsgemäßen Verfahren bevorzugt ein wässriges Vielkomponentengemisch eingesetzt. In den vielen Fällen umfasst das wässrige Vielkomponentengemisch organische Bestandteile. Das erfindungsgemäße Verfahren ist besonders geeignet, Wertstoffe aus wässrigen Vielkomponentengemischen, die organische Bestandteile umfassen, abzuscheiden und die Wertstoffe für eine neue Verwertung zur Verfügung zu stellen.

Wässrige Vielkomponentengemische, die in dem erfindungsgemäßen Verfahren als Edukt 31 eingesetzt werden können, sind beispielsweise Schlamm, Klärschlamm, Biomüll, Abfälle aus Biogasanlagen, wässrige organische Abfälle, industrielle Abfälle, kommunale Abfälle, tierische Abfälle, landwirtschaftliche Abfälle, Gartenabfälle, Tiermehl, pflanzliche Abfälle, Trester, Flugasche, Klärschlammflugasche, Abfälle der Lebensmittelindustrie, Bohrschlämme. In einer besonders bevorzugten Ausführungsform des Verfahrens ist das wässrige Vielkomponentengemisch Klärschlamm.

Das wässrige Vielkomponentengemisch kann weiterhin anorganische Bestandteile enthalten wie beispielsweise Metalle und Schwermetalle beziehungsweise Metallionen, Metallsalze, Metalloxide, Schwermetallionen, Schwermetallsalze, Schwermetalloxide, Phosphor, Phosphoroxid, Phosphat, Stickstoff, Stickoxide und Ammonium.

Wertstoffe im Sinne der Erfindung sind alle organischen und anorganischen Bestandteile, die in dem jeweiligen Vielkomponentengemisch enthalten sind, beispielsweise Phosphor beispielsweise in Form von Phosphat, Stickstoff beispielsweise in Form von Ammonium, Metalle beispielsweise in Form von Metallionensalzen, Schwermetalle beispielsweise in Form von Schwermetallionensalzen, Silizium beispielsweise in Form von Sand, Calcium beispielsweise in Form von Sand, Kohlenstoff beispielsweise in Form von Kohlendioxid und Methan, niedermolekulare Kohlenwasserstoffe wie Ethen, Propen, Buten, Wasserstoff aus Kohlenwasserstoff und Wasser. Vorzugsweise wird das mit dem Verfahren erhaltene Wasser gereinigt. Dabei wird gereinigtes, einleitfähiges Wasser erhalten.

Das erfindungsgemäße Verfahren liefert ausschließlich Wertstoffe; es verbleiben keine Reststoffe, die entsorgt werden müssen. Alle Bestandteile des wässrigen Vielkomponentengemisches, das als Edukt eingesetzt wird, werden in Wertstoffe umgewandelt bzw. als Wertstoff aus dem Vielkomponentengemisch abgeschieden, es bleibt kein Rückstand, der entsorgt werden muss.

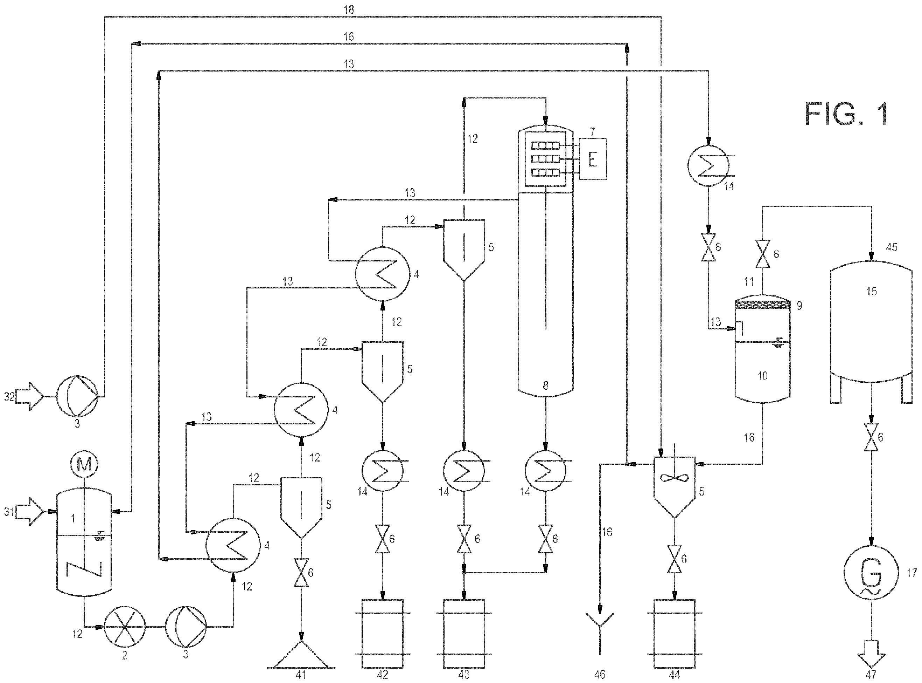

Es ist ein besonderes Kennzeichen des erfindungsgemäßen Verfahrens, dass die Abscheidung der Wertstofffraktionen und die Umwandlung und Abscheidung von Wertstoffen aus dem wässrigen Vielkomponentengemisch unter überkritischen Bedingungen und ohne Zusatz von Sauerstoff und/oder Katalysatoren durchgeführt wird. Dazu wird das wässrige Vielkomponentengemisch, das in dem erfindungsgemäßen Verfahren als Edukt eingesetzt wird, in ein Leitungssystem eingebracht. Das Leitungssytem umfasst Eduktleitung 12 und Produktleitung 13 und kann einen Vorlagebehälter 1 umfassen. Der Vorlagebehälter 1 kann auch eine Einrichtung zur Eindickung enthalten. Über die Eduktleitung 12 wird das wässrige Vielkomponentengemisch mit einer Pumpe 3 auf einen Druck von 25 bis 35 MPa komprimiert und die einzelnen Verfahrensschritte werden in einem geschlossenen Kreislauf in einer Vorrichtung durchgeführt beispielsweise wie in Figur 1, Figur 2 und Figur 3 dargestellt. Das wässrige Vielkomponentengemisch liegt während der Durchführung des Verfahrens komprimiert unter überkritschen Bedingungen vor und wird als "komprimiertes, wässriges Vielkomponentengemisch" bezeichnet. Dabei wird ein Anfangsdruck von 25 bis 35 MPa eingestellt. Innerhalb der Vorrichtung beispielsweise eine Vorrichtung gemäß Figur 1, Figur 2 oder Figur 3, in der das Verfahren durchgeführt wird, reduziert sich der Druck durch die apparatetechnischen Druckverluste, wobei der Druck jedoch im Bereich überkritischer Bedingungen bleibt.

In einer besonders bevorzugten Ausführungsform des Verfahrens wird das komprimierte, wässrige Vielkomponentengemisch nach dem Abtrennen der ersten, der zweiten und der dritten Wertstofffraktion 41, 42, 43 in einem Reaktor 8 auf maximal 700 Grad Celsius erwärmt. Die Erwärmung im Reaktor erfolgt unter überkritischem Druck und unter Sauerstoffausschluss. Vorzugsweise wird das komprimierte, wässrige Vielkomponentengemisch im Reaktor 8 auf mindestens 600 erwärmt, besonders bevorzugt auf maximal 680 Grad Celsius.

Gegenstand der Erfindung ist ein Verfahren zur fraktionierten Abscheidung von Wertstoffen aus einem Edukt 31/wässrigen Vielkomponentengemisch umfassend das Einbringen des Edukts 31, insbesondere eines wässrigen Vielkomponentengemisches, aus einem Vorlagebehälter 1 in die Eduktleitung 12, gegebenenfalls die Zerkleinerung von Komponenten in dem Edukt/wässrigen Vielkomponentengemisch beispielsweise mit einer Schneidevorrichtung 2, Kompression auf 25 bis 35 MPa beispielsweise mit einer Pumpe 3 insbesondere Hochdruckpumpe, und Führung der Eduktleitung 12 durch einen Wärmetauscher 4 zur Erwärmung des komprimierten Edukts 31/komprimierten wässrigen Vielkomponentengemisches auf 200 bis 300 Grad Celsius und Abtrennung der ersten abgeschiedenen Wertstofffraktion 41 beispielsweise mit einem Abscheider 5,
Führung der Eduktleitung 12 durch einen zweiten Wärmetauscher 4 zur Erwärmung des komprimierten Edukts 31/komprimierten wässrigen Vielkomponentengemisches auf 300 bis 400 Grad Celsius und Abtrennung einer zweiten abgeschiedenen Wertstofffraktion 42 beispielsweise mit einem zweiten Abscheider 5,
Führung der Eduktleitung 12 durch einen dritten Wärmetauscher 4 zur Erwärmung des komprimierten Edukts 31/komprimierten wässrigen Vielkomponentengemisches auf 400 bis 550 Grad Celsius und Abtrennung einer dritten abgeschiedenen Wertstofffraktion 43 beispielsweise mit einem dritten Abscheider 5,
Führung der Eduktleitung 12 in einen Reaktor 8, vorzugsweise Führung der Eduktleitung 12 über einen Überhitzer 7 in einen Reaktor 8. Durch den Überhitzer 7 wird das komprimierte Edukt 31/komprimierte wässrige Vielkomponentengemisch auf maximal 700 Grad Celsius, vorzugsweise 600 bis 680 Grad Celsius erwärmt.

In besonders bevorzugten Ausführungsformen des Verfahrens verbleibt das komprimierte, wässrige Vielkomponentengemisch 1 bis 5 Minuten, vorzugsweise 2 bis 3 Minuten, besonders bevorzugt 30 Sekunden, 40 Sekunden, 50 Sekunden, 60 Sekunden, 70 Sekunden, 80 Sekunden oder 90 Sekunden bei der gewählten Temperatur in dem Reaktor 8. Vorzugsweise wird das komprimierte, wässrige Vielkomponentengemisch nach dem Abtrennen der ersten, der zweiten und der dritten Wertstofffraktion 41, 42, 43 bei 25 bis 30 MPa unter Sauerstoffausschluss auf mindestens 600 Grad und maximal 700 Grad Celsius erwärmt. Vorzugsweise hat das komprimierte, wässrige Vielkomponentengemisch im Reaktor 8 bei der Temperatur von 600 bis 700 Grad Celsius einen Druck von 25 bis 30 MPa. Das erfindungsgemäße Verfahren ist dadurch gekennzeichnet, dass das wässrige Vielkomponentengemisch im Reaktor 8 unter überkritischen Bedingungen vorliegt. Im Reaktor 8 findet unter diesen Bedingungen eine hydrothermale Vergasung (thermochemische Vergasung) statt, wodurch weitere Komponenten aus dem wässrigen Vielkomponentengemisch in Wertstoffe umgewandelt und als Reaktionsprodukte erhalten werden. Vorzugsweise wird das komprimierte, wässrige Vielkomponentengemisch nach dem Abtrennen der ersten, der zweiten und der dritten Wertstofffraktion 41, 42, 43, bei 25 bis 30 MPa unter Sauerstoffausschluss auf mindestens 600 Grad und maximal 700 Grad Celsius erwärmt, und dann abgekühlt.

Im Reaktor 8 wird unter den überkritischen Bedingungen ein Reaktionsprodukt gebildet, dass Synthesegas 45 und Wasser 46 umfasst. Das Reaktionsprodukt liegt im Reaktor 8 unter überkritischen Bedingungen, d.h. einem Druck von 25 MPa oder mehr und hoher Temperatur vor.

Das gebildete Reaktionsprodukt kann auf verschiedene Arten abgekühlt werden, wobei vorzugsweise die Energie des Reaktionsprodukts genutzt wird. Beispielsweise kann das Reaktionsprodukt, dass unter überkritischen Bedingungen im Reaktor 8 vorliegt, zur Erwärmung neuen Edukts 31, d.h. neuem wässrigem Vielkomponentengemisch, verwendet werden. Ein entsprechendes Kreislaufsystem zur Rückgewinnung und Nutzung der Reaktionsenergie ist erfindungsgemäß bevorzugt. Dazu wird das Reaktionsprodukt durch die Produktleitung 13 geleitet. Die Produktleitung 13 führt durch einen oder mehrere, vorzugsweise drei Wärmetauscher 4. In den Wärmetauschern 4 wird die Wärmeenergie des Reaktionsprodukts auf komprimiertes Edukt 31, vorzugsweise komprimiertes, wässriges Vielkomponentengemisch, übertragen, dass dadurch stufenweise erwärmt wird.

Gegenstand der Erfindung ist ein Verfahren zur fraktionierten Abscheidung von Wertstoffen aus einem Edukt 31, vorzugsweise wässrigen Vielkomponentengemisch umfassend das Einbringen des Edukts 31, vorzugsweise wässrigen Vielkomponentengemisches aus einem Vorlagebehälter 1 in die Eduktleitung 12, gegebenenfalls die Zerkleinerung von Komponenten in dem wässrigen Vielkomponentengemisch beispielsweise mit einer Schneidevorrichtung 2,
Kompression auf 25 bis 35 MPa beispielsweise mit einer Pumpe 3 insbesondere Hochdruckpumpe, und Führung der Eduktleitung 12 durch einen Wärmetauscher 4 zur Erwärmung des komprimierten, wässrigen Vielkomponentengemisches auf 200 bis 300 Grad Celsius und Abtrennung der ersten abgeschiedenen Wertstofffraktion 41 beispielsweise mit einem Abscheider 5,
Führung der Eduktleitung 12 durch einen zweiten Wärmetauscher 4 zur Erwärmung des komprimierten, wässrigen Vielkomponentengemisches auf 300 bis 400 Grad Celsius und Abtrennung einer zweiten abgeschiedenen Wertstofffraktion 42 beispielsweise mit einem zweiten Abscheider 5,
Führung der Eduktleitung 12 durch einen dritten Wärmetauscher 4 zur Erwärmung des komprimierten, wässrigen Vielkomponentengemisches auf 400 bis 550 Grad Celsius und Abtrennung einer dritten abgeschiedenen Wertstofffraktion 43 beispielsweise mit einem dritten Abscheider 5,
Führung der Eduktleitung 12 in einen Reaktor 8, vorzugsweise Führung der Eduktleitung 12 über einen Überhitzer 7 in einen Reaktor 8 und Erwärmen des komprimierten wässrigen Vielkomponentengemisches im Überhitzer 7 auf maximal 700 Grad Celsius, vorzugsweise 600 bis 680 Grad Celsius,
Leitung des Reaktionsprodukts durch die Produktleitung 13 durch den dritten Wärmetauscher 4 zur Erwärmung komprimierten wässrigen Vielkomponentengemisches auf 400 bis 550 Grad Celsius,
Leitung des Reaktionsprodukts wird durch die Produktleitung 13 durch den zweiten Wärmetauscher 4 zur Erwärmung von komprimiertem wässrigem Vielkomponentengemisch auf 300 bis 400 Grad Celsius,
Leitung des Reaktionsprodukts durch die Produktleitung 13 durch den ersten Wärmetauscher zur Erwärmung von komprimiertem wässrigem Vielkomponentengemisch auf 200 bis 300 Grad Celsius,
gegebenenfalls Leitung des Reaktionsprodukts über einen oder mehrere Kühler 1, um das Reaktionsprodukt auf unter 100 Grad Celsius, vorzugsweise auf unter 50 Grad Celsius, besonders bevorzugt auf Raumtemperatur abzukühlen und gegebenenfalls anschließend durch ein Ventil 6 zu expandieren.

Die Energie, die in dem Reaktionsprodukt im Reaktor 8 enthalten ist, kann auch anderweitig genutzt oder gespeichert werden.

Durch Abkühlung und Expansion des Reaktionsprodukts wird aus dem Reaktionsprodukt Synthesegas 45 freigesetzt.

In dem Synthesegas 45 sind H₂, CH₄, CO₂ angereichert. Das Synthesegas 45 kann Alkane umfassen. In bevorzugten Ausführungsformen besteht das Synthesegas 45 zu mindestens 90 %, vorzugsweise mindestens 95 %, besonders bevorzugt zu 98 % oder mehr aus H₂, CH4, CO₂. Unter überkritischen Bedingungen im Reaktor 8 ist das Synthesegas 45 im Wasser 46 gelöst. Bei Abkühlung wird das Synthesegas 45 freigesetzt und kann von dem Wasser 46 bzw. dem wässrigen Rückstand abgetrennt werden. Gegenstand der Erfindung ist Synthesegas 45 erhältlich durch das erfindungsgemäße Verfahren. Gegenstand der Erfindung ist die Verwendung von Synthesegas 45 erhältlich durch das erfindungsgemäße Verfahren.

Das Reaktionsprodukt umfasst Synthesegas 45 und Wasser 46. Vorzugsweise besteht das Reaktionsprodukt im Wesentlichen aus Synthesegas 45 und Wasser 46, vorzugsweise aus mindestens 99 Gew. % bzw. 98 Gew. %, besonders bevorzugt 97 Gew. % oder weniger Synthesegas 45 und Wasser 46. Das Synthesegas 45 und / oder das Wasser 46 können Rückstände umfassen. Überwiegend umfasst das Reaktionsprodukt neben Synthesegas 45 und Wasser 46 Rückstände von weniger als 1 Gew. %. In bevorzugten Ausführungsformen besteht das Reaktionsprodukt zu mindestens 90 %, vorzugsweise mindestens 95 %, besonders bevorzugt zu 98 % oder mehr aus H₂, CH4, CO₂ und Wasser. Gegenstand der Erfindung ist ein Reaktionsprodukt erhältlich durch das erfindungsgemäße Verfahren. Gegenstand der Erfindung ist die Verwendung von Reaktionsprodukt erhältlich durch das erfindungsgemäße Verfahren.

Gegenstand der Erfindung ist ein Verfahren zur fraktionierten Abscheidung von Wertstoffen aus einem wässrigen Vielkomponentengemisch umfassend das Einbringen des Edukts 31, vorzugsweise wässrigem Vielkomponentengemisch aus einem Vorlagebehälter 1 in die Eduktleitung 12, gegebenenfalls die Zerkleinerung von Komponenten in dem wässrigen Vielkomponentengemisch beispielsweise mit einer Schneidevorrichtung 2,
Kompression auf 25 bis 35 MPa beispielsweise mit einer Pumpe 3 insbesondere Hochdruckpumpe, und Führung der Eduktleitung 12 durch einen Wärmetauscher 4 zur Erwärmung des komprimierten, wässrigen Vielkomponentengemisches auf 200 bis 300 Grad Celsius und Abtrennung der ersten abgeschiedenen Wertstofffraktion 41 beispielsweise mit einem Abscheider 5,
Führung der Eduktleitung 12 durch einen zweiten Wärmetauscher 4 zur Erwärmung des komprimierten, wässrigen Vielkomponentengemisches auf 300 bis 400 Grad Celsius und Abtrennung einer zweiten abgeschiedenen Wertstofffraktion 42 beispielsweise mit einem zweiten Abscheider 5,
Führung der Eduktleitung 12 durch einen dritten Wärmetauscher 4 zur Erwärmung des komprimierten, wässrigen Vielkomponentengemisches auf 400 bis 550 Grad Celsius und Abtrennung einer dritten abgeschiedenen Wertstofffraktion 43 beispielsweise mit einem dritten Abscheider 5,
Führung der Eduktleitung 12 in einen Reaktor 8, vorzugsweise Führung der Eduktleitung 12 über einen Überhitzer 7 in einen Reaktor 8. Durch den Überhitzer wird das komprimierte wässrige Vielkomponentengemisch auf maximal 700 Grad Celsius, vorzugsweise 600 bis 680 Grad Celsius erwärmt,
das Reaktionsprodukt wird durch die Produktleitung 13 durch den dritten Wärmetauscher 4 geleitet zur Erwärmung komprimierten wässrigen Vielkomponentengemisches auf 400 bis 550 Grad Celsius,
das Reaktionsprodukt wird dann durch die Produktleitung 13 durch den zweiten Wärmetauscher 4 geleitet zur Erwärmung von komprimiertem wässrigem Vielkomponentengemisch auf 300 bis 400 Grad Celsius,
das Reaktionsprodukt wird dann durch die Produktleitung 13 durch den ersten Wärmetauscher geleitet zur Erwärmung von komprimiertem wässrigem Vielkomponentengemisch auf 200 bis 300 Grad Celsius,
das Reaktionsprodukt wird dann gegebenenfalls über einen oder mehrere Kühler 14 geleitet, um das Reaktionsprodukt auf unter 100 Grad Celsius, vorzugsweise auf unter 50 Grad Celsius, besonders bevorzugt auf Raumtemperatur abzukühlen und anschließend durch ein Ventil 6 entspannt,
und zur Trennung von Synthesegas 45 und wässrigem Rückstand bzw. Wasser 46 in einen Abscheidebehälter 10 geleitet.

Die vorstehenden Verfahren können folgende weiteren Schritte umfassen:
Zur Trennung von Synthesegas 45 und wässrigem Rückstand bzw. Wasser 46 wird das Reaktionsprodukt in einen Abscheidebehälter 10 geleitet. Das Synthesegas 45 wird, vorzugsweise über einen Demister 9, abgeschieden. Zunächst kann das Synthesegas 45 dann in einen Gasspeicher 15 überführt werden. Dabei ist der Gasspeicher 15 auch ein Energiespeicher, da das Synthesegas 45 unter hohem Druck zwischen 150-200 bar oder mehr gewonnen wird. Das erhaltene Synthesegas 45 kann mit oder ohne vorherige Überführung in einen Gasspeicher 15 beispielsweise folgendermaßen verwendet werden:
a) das Synthesegas 45 kann zur Stromerzeugung verwendet werden, beispielsweise in ein Blockheizkraftwerk (BHKW) 17 eingespeist werden;
b) aus dem Synthesegas 45 kann in einer Gasaufbereitungsanlage Wasserstoff abgetrennt und der Wasserstoff dann beispielsweise für die Mobilität oder industrielle Anwendungen verwendet werden und gegebenenfalls das verbleibende Synthesegas, dass überwiegend aus CO₂, CH4 und Alkanen besteht zur Stromerzeugung genutzt werden;
c) das Synthesegas kann zur Herstellung von chemischen Produkten verwendet werden wie beispielsweise Methanol;
d) das Synthesegas 45 und Abwärme aus dem Verfahren können zur Erzeugung von Nutzwärme beispielsweise Dampf verwendet werden.

Die vorstehenden Verfahren können folgende weiteren Schritte umfassen: Zur Trennung von Synthesegas 45 und wässrigem Rückstand bzw. Wasser 46 wird das Reaktionsprodukt in einen Abscheidebehälter 10 geleitet. Das Wasser 46 wird bei dem erfindungsgemäßen Verfahren vorzugsweise in Form eines Wasserstrahls gewonnen. Das Wasser 46 bzw. der Wasserstrahl wird ebenfalls unter hohem Druck, beispielsweise 150 bis 200 bar gewonnen. Der Druck des Wassers 46 / Wasserstrahls kann etwas geringer sein, als der Druck des Synthesegases 46. In der Regel ist der Druck des Wassers 46 / Wasserstrahls maximal 2 %, vorzugsweise maximal 1,8 % geringer als der Druck des Synthesegases 45.

Der wässrige Rückstand oder das Wasser 46 kann beispielsweise
a) direkt weiterverwendet oder eingeleitet werden;
b) mit Fällungsmittel wie Mg²⁺, Ca²⁺ oder K⁺ versetzt und abgeschiedenes Phosphat und/oder Ammonium abgetrennt werden, vorzugsweise über einen Abscheider 5;
c) gefiltert und dann weiterverwendet werden
d) zur Verdünnung neuen Edukts 31 verwendet werden.

Vorzugsweise wird ein Teil des Wassers zur Verdünnung neuen Edukts 31 verwendet. Dazu wird das Wasser 46 bzw. der wässrige Rückstand über Kreislaufwasserleitung 16 zurückgeführt.

Das in dem erfindungsgemäßen Verfahren erhaltene Wasser 46 ist so gereinigt, dass es einleitfähig ist. In bevorzugten Ausführungsformen des Verfahrens wird Wasser 46 mit einer Reinheit von mehr als 99 %, vorzugsweise mehr als 99,5 %, besonders bevorzugt mehr als 99,9 Vol. % H₂O erhalten. In besonders bevorzugten Ausführungsformen des Verfahrens wird Wasser mit einer Reinheit von 99,999 Vol. % H₂O erhalten. Vorzugsweise wird der größte Anteil des erhaltenen Wassers 46 als gereinigtes Wasser eingeleitet (einleitfähig). Das Wasser 46 ist aufgrund seiner hohen Reinheit einleitfähig.

Das erfindungsgemäße Verfahren ist dadurch gekennzeichnet, dass unter überkritischen Bedingungen Wertstoffe in mindestens drei, vorzugsweise mindestens vier Wertstofffraktionen überführt werden, die aus dem wässrigen Vielkomponentengemisch abgetrennt werden können. Das Reaktionsprodukt, dass Synthesegas 45 und Wasser 46 umfasst, ist erfindungsgemäß ebenfalls eine Wertstofffraktion.

Die organischen Bestandteile in dem wässrigen Vielkomponentengemisch lösen sich unter überkritischen Bedingungen von den Wertstoffen und werden durch thermochemische Vergasung in Synthesegas 45 überführt. Vorzugsweise laufen alle Verfahrensschritte der Wertstoffabscheidung und Abtrennung, mindestens bis zum Verfahrensschritt der thermochemischen Vergasung im Reaktor 8 einschließlich, unter überkritischen Bedingungen ab. Dabei werden die organischen Komponenten in dem Vielkomponentengemisch mit überkritischem Wasser bei Drücken und Temperaturen oberhalb des kritischen Punktes des Wassers (22,1 MPa und 374 Grad Celsius) vergast. Unter diesen Bedingungen löst das überkritische Wasser organische Substanzen gut auf, während anorganische Salze gleichzeitig ausfallen. Dieser Effekt tritt verstärkt auf, wenn die Dichte des Wassers einen Wert von 200 kg/m³ unterschreitet. Dieser Wert stellt sich bei Temperaturen gerade oberhalb der so genannten pseudokritischen Temperatur ein. Das vorliegende Verfahren ist dadurch gekennzeichnet, dass das wässrige Vielkomponentengemisch bei Drücken von mindestens 25 MPa erwärmt wird. Die unterschiedliche Löslichkeit der in dem Vielkomponentengemisch enthaltenen Komponenten, wie z.B. die Löslichkeit von Metallionen und organische Substanzen, während der Erwärmung unter überkritischen Bedingungen wird zur Abtrennung der Wertstofffraktionen genutzt.

Die erste Wertstofffraktion 41 wird aus dem wässrigen Vielkomponentengemisch bei mindestens 25 MPa und vorzugsweise maximal 35 MPa und bei einer Temperatur von 200 bis 300 Grad Celsius abgeschieden bzw. fällt aus und kann dann beispielsweise mittels eines Abscheiders 5 und eines Ventils 6 abgetrennt werden. In der ersten Wertstofffraktion 41 sind Feststoffe angereichert, beispielsweise Metalle, feste Mineralstoffe, Sand, beispielsweise Calcium, Silizium, beispielsweise in Form ihrer Oxide. Wertstoffe in der ersten Wertstofffraktion 41 sind beispielsweise Calcium, Silicium und ihre Oxide, Metalle und Sand. Gegenstand der Erfindung ist die erste Wertstofffraktion 41 erhältlich durch das erfindungsgemäße Verfahren. Gegenstand der Erfindung ist die Verwendung der ersten Wertstofffraktion 41 erhältlich durch das erfindungsgemäße Verfahren.

Die zweite Wertstofffraktion 42 wird aus dem wässrigen Vielkomponentengemisch bei mindestens 25 MPa und bei einer Temperatur von 300 bis 400 Grad Celsius abgeschieden werden bzw. fällt aus und kann dann beispielsweise mittels eines zweiten Abscheiders 5 und eines zweiten Ventils 6 abgetrennt werden. In der zweiten Wertstofffraktion 42 sind Metallsalze angereichert, vorzugsweise feste oder flüssige Metallsalze, beispielsweise Metallsalze, die Eisen, Aluminium, Nickel, Zink, Cadmium, Blei, Mangan umfassen. Wertstoffe in der zweiten Wertstofffraktion 42 sind beispielsweise Eisen, Aluminium, Nickel, Zink, Cadmium, Blei, Mangan in Form ihrer Salze. Gegenstand der Erfindung ist die zweite Wertstofffraktion 42 erhältlich durch das erfindungsgemäße Verfahren. Gegenstand der Erfindung ist die Verwendung der zweiten Wertstofffraktion 42 erhältlich durch das erfindungsgemäße Verfahren.

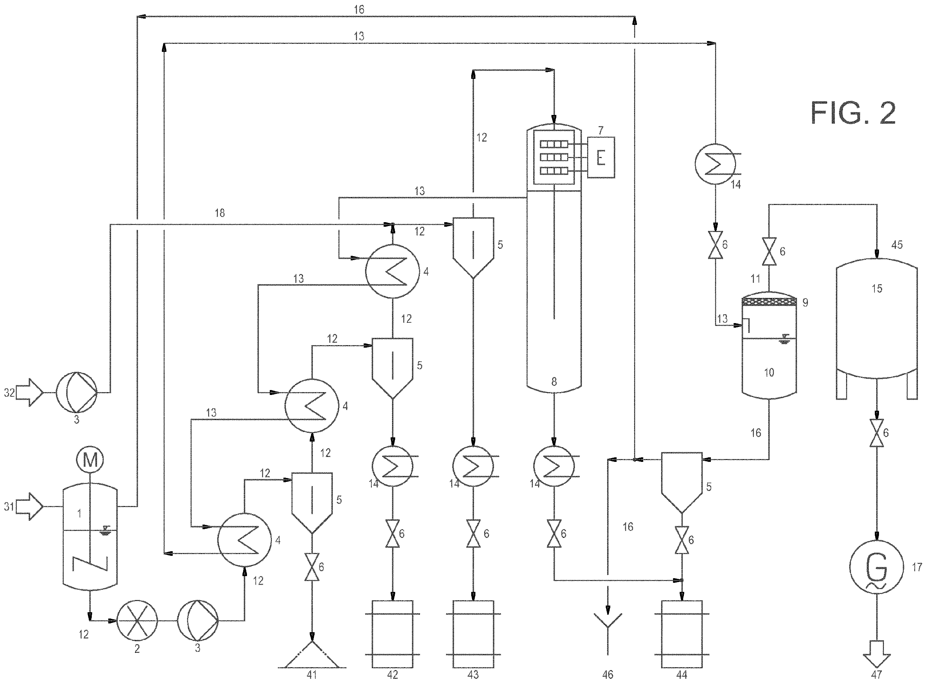

Die dritte Wertstofffraktion 43 wird aus dem wässrigen Vielkomponentengemisch bei mindestens 25 MPa und Temperaturerhöhung auf 400 bis 550 Grad Celsius abgeschieden bzw. fällt aus. Zur vollständigen Abscheidung der Wertstoffe Phosphat und Ammonium in der dritten Wertstofffraktion 43 kann ein Fällungsmittel 32 wie Mg²⁺ oder Ca²⁺ oder K⁺ oder Mg²⁺ und Ca²⁺ oder Mg²⁺ und K⁺ oder Ca²⁺ und K⁺ oder Mg²⁺ und Ca²⁺ und K⁺ zugesetzt und Phosphat und Ammonium dadurch vollständig in der dritten Wertstofffraktion 43 abgeschieden und abgetrennt werden. Mg²⁺ oder Ca²⁺ oder K⁺ oder Mg²⁺ und Ca²⁺ oder Mg²⁺ und K⁺ oder Ca²⁺ und K⁺ oder Mg²⁺ und Ca²⁺ und K⁺ dienen dabei als Fällungsmittel 32 zur Abscheidung von Phosphat und/oder Ammonium. Das Fällungsmittel 32 wird über eine Leitung mit Fällungsmittel 18 zu dem komprimierten, wässrigen Vielkomponentengemisch, dass sich in der Eduktleitung 12 befindet, zugegeben (Fig. 2). Beispielsweise kann das komprimierte wässrige Vielkomponentengemisch in den Abscheider 5 geleitet und das Fällungsmittel 32 ebenfalls in den Abscheider 5 geleitet werden. Gegenstand der Erfindung ist die dritte Wertstofffraktion 43 erhältlich durch das erfindungsgemäße Verfahren mit Zugabe von Fällungsmittel in der dritten Wertstofffraktion 43. Gegenstand der Erfindung ist die Verwendung der dritten Wertstofffraktion 43 erhältlich durch das erfindungsgemäße Verfahren mit Zugabe von Fällungsmittel in der dritten Wertstofffraktion 43.

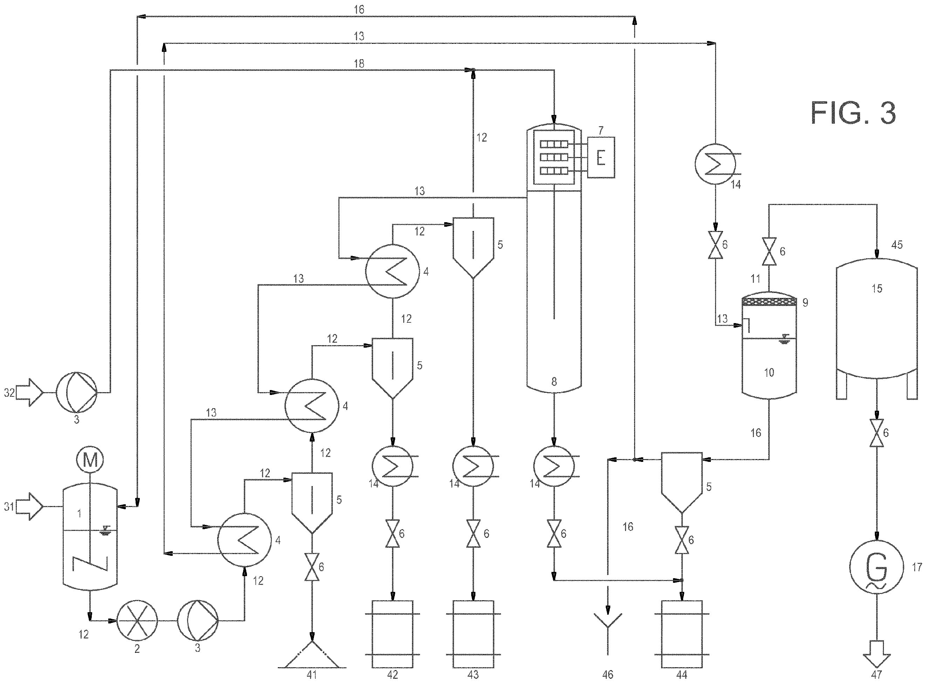

Alternativ, ohne Zugabe von Fällungsmittel 32, beispielsweise Mg²⁺ oder Ca²⁺ oder K⁺, wird nur ein Teil des Phosphats und Ammoniums in der dritten Wertstofffraktion 43 abgeschieden und abgetrennt während ein Teil des Phosphats und Ammoniums in Lösung bleibt und an anderer Stelle im Verfahren abgeschieden werden kann (Fig. 1 und Fig. 3). Gegenstand der Erfindung ist die dritte Wertstofffraktion 43 erhältlich durch das erfindungsgemäße Verfahren ohne Zugabe von Fällungsmittel in der dritten Wertstofffraktion 43. Gegenstand der Erfindung ist die Verwendung der dritten Wertstofffraktion 43 erhältlich durch das erfindungsgemäße Verfahren ohne Zugabe von Fällungsmittel in der dritten Wertstofffraktion 43. Die vollständige Abscheidung von Phosphat und/oder Ammonium erfolgt durch Zugabe von Fällungsmittel 32 entweder in der dritten Wertstofffraktion oder aus dem Reaktionsprodukt bzw. dem erhaltenen wässrigen Rückstand oder Wasser 46.

In der vierten Wertstofffraktion, die Synthesegas 45 und Wasser 46 umfasst, kann Phosphat und/oder Ammonium durch Zugabe von Fällungsmittel 32 abgeschieden werden. Beispielsweise nach Abkühlung und Entspannung des Reaktionsprodukts und Abtrennung des Synthesegases 45 wird zu der wässrigen Lösung bzw. dem Wasser Fällungsmittel 32 zugegeben (Fig. 1). Alternativ kann beispielsweise Fällungsmittel 32 in den Reaktor 8 zugegeben werden (Fig. 3). Nach Abtrennung des Synthesegases 45 kann Phosphat und Ammonium beispielsweise dadurch abgeschieden werden, dass Mg²⁺ oder Ca²⁺ oder K⁺ oder Mg²⁺ und Ca²⁺ oder Mg²⁺ und K⁺ oder Ca²⁺ und K⁺ oder Mg²⁺ und Ca²⁺ und K⁺ zugegeben werden. Die Abtrennung des Phosphats und Ammoniums in oder unmittelbar vor der vierten Wertstofffraktion, d.h. nach der thermochemischen Vergasung und gegebenenfalls nach Abtrennung des Synthesegases 45 kann nach Abkühlung und Entspannung, d.h. bei Raumdruck und Raumtemperatur, erfolgen. Die Abscheidung von Phosphat und/oder Ammonium kann erfindungsgemäß an verschiedenen Stellen im Verfahren erfolgen. Gekennzeichnet ist die Abscheidung von Phosphat und/oder Ammonium dadurch, dass Fällungsmittel 32 zugegeben wird. Erfindungsgemäß bevorzugt ist die Abscheidung von Phosphat und Ammonium nach Abkühlung und Entspannung des Reaktionsprodukts, vorzugsweise nach Abtrennung des Synthesegases 45.

Als Fällungsmittel 32 eignen sich vorzugsweise Magnesium, Calcium und Kalium. Bei der Verwendung von Magnesium und/oder Calcium und/oder Kalium wird direkt pflanzenverfügbares Ammoniumphosphat, beispielsweise MAP, erhalten, dass direkt als Dünger eingesetzt werden kann. Gegenstand der Erfindung ist pflanzenverfügbarer Dünger, beispielsweise MAP, erhältlich durch das erfindungsgemäße Verfahren. Gegenstand der Erfindung ist die Verwendung von pflanzenverfügbarer Dünger, beispielsweise MAP, erhältlich durch das erfindungsgemäße Verfahren.

Magnesium als Fällungsmittel 32 kann z.B. in Form von MgO oder MgCl₂ zugegeben werden. Dabei kann die Temperatur beispielsweise bis maximal 600 Grad Celsius, vorzugsweise bis maximal 550 Grad Celsius, besonders bevorzugt bis maximal 500 Grad Celsius oder 400 Grad Celsius oder weniger, beispielsweise Raumtemperatur betragen. Die gewählte Temperatur hängt dabei davon ab, ob Mg²⁺ vor der Abtrennung der dritten Wertstofffraktion oder nach Abkühlung und Expansion des Reaktionsprodukts zugegeben wird. Wird Mg²⁺ vor der Abtrennung der dritten Wertstofffraktion zugegeben, kann die spätere Zugabe entfallen. In analoger Weise können zur Abscheidung von Phosphat und Ammonium Ca²⁺ und K⁺ zugegeben werden. Es können auch Mischungen unterschiedlicher Zusammensetzung an Mg²⁺ und Ca²⁺ und K⁺ zur Abscheidung verwendet werden. Vorzugsweise werden Mg²⁺ und/oder Ca²⁺ und/oder K⁺ in stöchiometrischen Mengen oder im leichten Überschuss angeben.

In besonders bevorzugten Ausführungsformen der Erfindung werden in den Wertstofffraktionen Magnesium-Ammonium-Phosphat (abgekürzt "MAP", auch genannt Struvit) abgeschieden. In besonders bevorzugten Ausführungsformen der Erfindung wird in der dritten und gegebenenfalls der vierten Wertstofffraktion pflanzenverfügbares MAP (MgNH₄PO₄ x 6H₂O) angereichert, beispielsweise MgNH₄PO₄ x 6H2O (9,9 % Mg, 7,3 % NH4, 39,0 % PO₄, 43,8 % H₂O). Dabei ist das erhaltene MAP kein chemisch reines Produkt. Die Zusammensetzung des MAP ist unter anderem abhängig vom eingesetzten Edukt, der Zusammensetzung des wässrigen Vielkomponentengemisches.
In den Wertstofffraktion können ein oder mehrere Verbindungen ausgewählt aus MAP, Kalium-di-hydrogenphosphat KH₂PO₄, Di-Ammonium-hydrogenphosphat (NH₄)₂HPO₄, P₂O₅, Superphosphat, Calcium-di-hydrogenphosphat (Ca₃(H₂PO₄)₂), Calciumsulfat 2[CaSO₄ x 2H₂O], Doppelsuperphosphat, Calcium-di-hydrogenphosphat (Ca₃(H₂PO₄)₂), Tripelsuperphosphat, Di-Ammoniumhydrogenphosphat ((NH4)₂HPO₄) auch Di-Ammonphosphat (Di-Ammoniumphosphat, DAP, 18-46-0, ca. 18 % N, 46 % P₂O₅, 0 % K₂O), Ca₅Si₆O₁₆(OH)₂ x 4H₂O. Vorzugsweise sind die in der bzw. den Wertstofffraktionen abgeschiedenen Phosphat- und Ammonium-Verbindungen wasserlöslich und gut pflanzenverfügbar. MAP und andere Phosphat-Ammonium-Verbindungen werden mit dem vorliegenden Verfahren in hohen Ausbeuten erhalten. Diese Verbindungen sind schadstoffarme Produkte, die wegen ihrer guten Pflanzenverfügbarkeit sehr gut als Dünger oder als Rohstoff für die Düngemittelherstellung geeignet sind. Gegenstand der Erfindung sind Phosphor und Ammoniumverbindungen erhältlich durch das erfindungsgemäße Verfahren.

Die Verwendung von Phosphor und Ammoniumverbindungen erhältlich durch das erfindungsgemäße Verfahren wird hier auch beschrieben.

Es zeichnet sich ab, dass Klärschlamm zukünftig in deutlich geringeren Mengen landwirtschaftlich verwertet werden wird, insbesondere durch die strengeren Vorschriften in der Klärschlammverordnung. Die im Abwasser und letztlich im Klärschlamm enthaltenen Nährstoffe, vor allem Phosphor, sollen auf anderem Wege der Landwirtschaft in qualitativ hochwertiger Form wieder zugeführt werden. Durch eine Phosphorrückgewinnung aus Abwasser können signifikante Mengen an Phosphor wiedergewonnen werden. Das vorliegende Verfahren liefert Magnesium-Ammonium-Phosphat und andere Phosphat-Ammonium-Verbindungen als gut pflanzenverfügbare Produkte und mit hohem Wirkungsgrad von mindestens 80 %, vorzugsweise mindestens 85 % oder mehr.

Die Anwendung des erfindungsgemäßen Verfahrens und die Anwendung einer Vorrichtung zur Abscheidung, Abtrennung und Rückgewinnung von Phosphat oder zur Herstellung von Dünger aus wässrigen Vielkomponentengemischen wie Klärschlamm werden hier auch beschrieben. Die Anwendung des Verfahrens oder die Anwendung einer Vorrichtung zur Herstellung von Magnesium-Ammonium-Phosphat, Calcium-Ammonium-Phosphat, Kalium-Ammonium-Phosphat werden hier auch beschrieben. Das vorliegende Verfahren eignet sich zur Herstellung von Dünger, insbesondere hochwertigem, mineralischem Dünger, insbesondere Langzeitdünger aus dem die Nährstoffe von Pflanzen gut aufgenommen werden können, der als Wertstofffraktion drei und / oder vier erhalten wird, aus Abwasser und/oder Klärschlamm als wässrigem Vielkomponentengemisch. Das Verfahren kann zur Herstellung von Dünger angewendet werden.

Dünger, aus dem Nährstoffe von Pflanzen gut aufgenommen werden können wird "pflanzenverfügbarer Dünger" genannt. "Pflanzenverfügbarer Dünger" bezeichnet einen Dünger, aus dem Pflanzen mindestens 50 Gew. %, vorzugsweise mindestens 60 Gew %, besonders bevorzugt mindestens 70 Gew. % oder mehr des enthaltenen Phosphats aufnehmen können.

Dünger, insbesondere pflanzenverfügbarerer Dünger, beispielsweise Dünger, der mindestens 50 Gew. % MAP umfasst, ist nach dem erfindungsgemäßen Verfahren herstellbar. Dünger, umfassend eine oder mehrere Verbindungen ausgewählt aus MAP, KH₂PO₄, (NH₄)₂HPO₄, P₂O₅, Superphosphat, (Ca₃(H₂PO₄)₂), 2[CaSO₄ x 2H₂O], Doppelsuperphosphat, (Ca₃(H₂PO₄)₂), Tripelsuperphosphat, ((NH₄)₂HPO₄), Ca₅Si₆O₁₆(OH)₂ x 4H₂O ist nach dem erfindungsgemäßen Verfahren herstellbar, vorzugsweise in der beschriebenen Vorrichtung.

Gegenüber bekannten Verfahren zur Klärschlammaufarbeitung unterscheidet sich das erfindungsgemäße Verfahren unter anderem dadurch, dass eine Wertstofffraktion erhalten wird, in der pflanzenverfügbare Phosphat-Verbindungen angereichert sind. Die dritte und / oder vierte Wertstofffraktion, die auch als Nährstofffraktion bezeichnet wird und in der bei Zugabe von Mg²⁺ MAP angereichert ist, ist dadurch besonders, dass sie keine Schwermetalle, giftigen organischen Bestandteile oder pharmazeutisch oder biologisch bedenkliche Substanzen umfasst und die deshalb direkt beispielsweise als Dünger eingesetzt werden kann.

"Angereichert" in einer Wertstofffraktion oder im Synthesegas bedeutet, dass die Wertstofffraktion oder das Synthesegas im Wesentlichen aus einem oder mehreren Wertstoffen bestehen. Beispielsweise zu mindestens 50 Gew. % oder 60 Gew. %, vorzugsweise mindestens 70 Gew. % oder 80 Gew. %, besonders bevorzugt mindestens 90 Gew. % oder mehr als 95 Gew. % aus dem einen oder den mehreren Wertstoffen.

Wertstoffe sind beispielsweise Metalle, Schwermetalle, Metallionen, Metallsalze, Metalloxide, Schwermetallionen, Schwermetallsalze, Schwermetalloxide, beispielsweise Eisen, Eisensalze, Aluminium, Aluminiumsalz, Nickel, Nickelsalz, Zink, Zinksalz, Cadmium, Cadmiumsalz, Blei, Bleisalz, Titan, Titansalz, Quecksilber, Quecksilbersalz, Zinn, Zinnsalz, Mangan, Mangansalz, Molybdän, Molybdänsalz, Cobalt, Cobaltsalz, Phosphor, Phosphoroxid, Phosphat, Stickstoff, Stickoxide, Ammonium, Silizium beispielsweise in Form von Sand, Calcium beispielsweise in Form von Sand, Kohlenstoff in Form von Kohlendioxid und Methan, Wasserstoff. Wertstoffe sind mit dem erfindungsgemäßen Verfahren herstellbar.

Die erste Wertstofffraktion 41 umfassend eine oder mehrere Stoffe ausgewählt aus Metallen, Schwermetallen, beispielsweise Eisen, Aluminium, Nickel, Zink, Cadmium, Blei, Titan, Quecksilber, Zinn, Mangan, Molybdän, Cobalt, und Metalllegierungen, Silizium beispielsweise in Form von Sand, Calcium beispielsweise in Form von Sand, ist dadurch gekennzeichnet, dass die erste Wertstofffraktion nach dem erfindungsgemäßen Verfahren herstellbar ist.

Die zweite Wertstofffraktion 42 umfassend eine oder mehrere Stoffe ausgewählt aus Metallionen, Metallsalzen, Metalloxiden, Schwermetallionen, Schwermetallsalzen, Schwermetalloxiden, beispielsweise Eisensalzen, Aluminiumsalzen, Nickelsalzen, Zinksalzen, Cadmiumsalzen, Bleisalzen, Titansalzen, Zinnsalzen, Mangansalzen, Molybdänsalzen, Cobaltsalzen, ist dadurch gekennzeichnet, dass die zweite Wertstofffraktion 42 nach dem erfindungsgemäßen Verfahren herstellbar ist.

Die dritte Wertstofffraktion 43 umfassend eine oder mehrere Stoffe ausgewählt aus Phosphor, Phosphoroxid, Phosphat, Stickstoff, Stickoxide, Ammonium, Magnesium-Ammonium-Phosphat, Calcium-Ammonium-Phosphat, Kalium-Ammonium-Phosphat, KH₂PO₄, (NH₄)₂HPO₄, P2O5, Superphosphat, (Ca3(H2PO4)2), 2[CaSO4 x 2H2O], Doppelsuperphosphat, (Ca3(H2PO4)2), Tripelsuperphosphat, ((NH4)2HPO4), Ca₅Si₆O₁₆(OH)₂ x 4H₂O ist dadurch gekennzeichnet, dass die dritte Wertstofffraktion 43 nach dem erfindungsgemäßen Verfahren herstellbar ist.

Die vierte Wertstofffraktion 44 umfassend eine oder mehrere Stoffe ausgewählt aus Phosphor, Phosphoroxid, Phosphat, Stickstoff, Stickoxide, Ammonium, Magnesium-Ammonium-Phosphat, Calcium-Ammonium-Phosphat, Kalium-Ammonium-Phosphat, MAP, KH₂PO₄, (NH₄)₂HPO₄, P₂O₅, Superphosphat, (Ca₃(H₂PO₄)₂), 2[CaSO₄ x 2H₂O], Doppelsuperphosphat, (Ca₃(H₂PO₄)₂), Tripelsuperphosphat, ((NH₄)₂HPO₄), Ca₅Si₆O₁₆(OH)₂ x 4H₂O ist dadurch gekennzeichnet, dass die vierte Wertstofffraktion 44 nach dem erfindungsgemäßen Verfahren herstellbar ist.

Mit dem erfindungsgemäßen Verfahren können die Wertstoffe, die in dem wässrigen Vielkomponentensystem enthalten sind, auch mehr als drei Wertstofffraktionen abgeschieden werden (d.h. hier: mehr als drei Wertstofffraktionen gerechnet bis zum Verfahrensschritt der thermochemischen Vergasung im Reaktor 8). Das bedeutet, dass die Wertstoffe in kleineren Wertstofffraktionen abgeschieden und abgetrennt werden. Dazu werden die Temperaturerhöhungen bis maximal 600, vorzugsweise maximal 550 Grad Celsius in kleineren Intervallen, beispielsweise in 50 Grad Temperaturintervallen) durchgeführt und dadurch entsprechend mehr als drei Wertstofffraktionen bis zum Verfahrensschritt der thermochemischen Vergasung abgeschieden und gegebenenfalls abgetrennt. Entsprechend ihrer jeweiligen Löslichkeit werden auf diese Weise weniger unterschiedliche Wertstoffe in einer Wertstofffraktion erhalten im Vergleich zur den gemäß Anspruch 1 beschriebenen drei Wertstofffraktionen, die während der Temperaturerhöhungen 200 bis 550 Grad Celsius unter überkritischen Bedingungen erhalten werden.

Eine entsprechende Anpassung des Verfahrens kann der Fachmann einfach vornehmen.

Das erzeugte Reaktionsprodukt ist insbesondere das Synthesegas 45. Das Synthesegas 45 besteht zu mindestens 80 Vol. %, vorzugsweise mindestens 90 Vol. % aus Kohlendioxid, Methan und Wasserstoff und ist nach dem erfindungsgemäßen Verfahren herstellbar.

Das erfindungsgemäße Verfahren unterscheidet sich von bekannten Verfahren dadurch, dass die Anreicherung unter überkritischen Bedingungen und anschließender thermochemischer Vergasung ohne Zusatz von Katalysatoren und unter Sauerstoffausschluss durchgeführt wird. Durch diese Reaktionsbedingungen wird ein Reaktionsprodukt, insbesondere Synthesegas 45 und Wertstofffraktionen erhalten, die sich von bekannten Reaktionsprodukten unterscheiden.

In dem erfindungsgemäßen Verfahren wird vorzugsweise ein geschlossener Wärmekreislauf verwendet. Das im Reaktor 8 mittels thermochemischer Vergasung unter überkritischen Bedingungen (25 - 30 MPa und 600 - 700 Grad Celsius) gebildete Reaktionsprodukt weist eine hohe Wärmeenergie auf. Vorzugsweise wird die Wärmeenergie des Reaktionsprodukts genutzt, um neues Edukt 31 zu erwärmen. Beispielsweise wird das Reaktionsprodukt durch Wärmetauscher 4 geleitet und zur Erwärmung von komprimiertem, wässrigem Vielkomponentengemisch verwendet. In einer bevorzugten Ausführungsform des Verfahrens wird das Reaktionsprodukt aus dem Reaktor 8 über Produktleitung 13 in mindestens einen, vorzugsweise mindestens zwei oder drei Wärmetauscher 4 geleitet und zur Erwärmung von komprimiertem wässrigem Vielkomponentengemisch verwendet. Vorzugsweise sind zwei oder drei oder mehr Wärmetauscher 4 hintereinander angeordnet, durch die das Reaktionsprodukt nacheinander geleitet wird und seine Wärmeenergie abgibt und dabei abkühlt. Besonders bevorzugt ist die Leitung des Reaktionsprodukts in einen ersten Wärmetauscher 4 zur Erwärmung von komprimiertem, wässrigem Vielkomponentengemisch von 300 bis 400 Grad Celsius auf 400 bis 550 Grad Celsius, dann Leitung durch einen zweiten Wärmetauscher 4 zur Erwärmung von komprimiertem, wässrigem Vielkomponentengemisch von 200 bis 300 Grad Celsius auf 300 bis 400 Grad Celsius, dann Leitung durch einen dritten Wärmetauscher 4 zur Erwärmung von komprimiertem, wässrigem Vielkomponentengemisch von der Ausgangstemperatur auf 200 bis 300 Grad Celsius. Die Ausgangstemperatur des komprimierten, wässrigen Vielkomponentengemisches in der Eduktleitung 12 liegt bei 0 bis 50 Grad Celsius, vorzugsweise bei 15 bis 30 Grad Celsius, besonders bevorzugt bei etwa 25 Grad Celsius.

Das erfindungsgemäße Verfahren umfasst, dass das Reaktionsprodukt auf weniger als 50 Grad Celsius abgekühlt wird. Das Reaktionsprodukt wird anschießend oder gleichzeitig auf einen Druck von weniger als 1 MPa, vorzugsweise weniger als 0,5 MPa entspannt (expandiert). Dass Synthesegas 45 ist unter überkritischen Bedingungen, wie sie beispielsweise im Reaktor 8 vorliegen, im Wasser 46 gelöst. Die Wasser 46 und Synthesegas 45 bilden bei Temperaturen zwischen 600 und 700 Grad Celsius und Drücken über 25 MPa eine Phase. Durch Abkühlung und Expansion werden Synthesegas 45 und Wasser 46 getrennt. Das Synthesegas 45 kann abgetrennt und weiterverwendet werden. Beispielsweise kann das erfindungsgemäße Verfahren die Abtrennung von Wasserstoff aus dem Synthesegas 45 umfassen. Beispielsweise kann das erfindungsgemäße Verfahren die Abtrennung von Kohlendioxid aus dem Synthesegas 45 umfassen. Beispielsweise kann das erfindungsgemäße Verfahren die Abtrennung von Wasserstoff aus dem Synthesegas 45 umfassen. Das Synthesegas 45 kann beispielsweise in Blockheizkraftwerken (BHKW) eingesetzt werden. Das erhaltene Synthesegas 45 kann mit oder ohne vorherige Überführung in einen Gasspeicher 15 beispielsweise folgendermaßen verwendet werden: das Synthesegas 45 kann zur Stromerzeugung verwendet werden, beispielsweise in ein Blockheizkraftwerk (BHKW) 17 eingespeist werden; aus dem Synthesegas 45 kann in einer Gasaufbereitungsanlage Wasserstoff abgetrennt und der Wasserstoff dann beispielsweise für die Mobilität oder industrielle Anwendungen verwendet werden und gegebenenfalls das verbleibende Synthesegas, dass überwiegend aus CO₂, CH₄ und Alkanen besteht zur Stromerzeugung genutzt werden; das Synthesegas kann zur Herstellung von chemischen Produkten verwendet werden wie beispielsweise Methanol; das Synthesegas 45 und Abwärme aus dem Verfahren können zur Erzeugung von Nutzwärme beispielsweise Dampf verwendet werden. Der wässrige Rückstand oder das Wasser 46 oder der Wasserstrahl kann beispielsweise direkt weiterverwendet oder eingeleitet werden; mit Fällungsmittel wie Mg²⁺, Ca²⁺ oder K⁺ versetzt und abgeschiedenes Phosphat und/oder Ammonium abgetrennt werden, vorzugsweise über einen Abscheider 5; gefiltert und dann weiterverwendet oder eingeleitet werden; zur Verdünnung neuen Edukts 31 verwendet werden.

Gegenstand der Erfindung ist ein Verfahren zur fraktionierten Abscheidung von Wertstoffen aus wässrigen Vielkomponentengemischen in einer Vorrichtung umfassend Pumpe 3, Wärmetauscher 4, Reaktor 8 mit Überhitzer 7 und Abscheider 5 wobei das wässrige Vielkomponentengemisch in die Vorrichtung gepumpt und auf 25 bis 35 MPa komprimiert wird,
das komprimierte, wässrige Vielkomponentengemisch auf 200 bis 300 Grad Celsius erwärmt und eine ersten Wertstofffraktion 41 abgetrennt wird, in der feste Stoffe angereichert sind,
das komprimierte, wässrige Vielkomponentengemisch weiter erwärmt wird auf 300 bis 400 Grad Celsius und eine zweite Wertstofffraktion 42 abgetrennt wird, in der Metallsalze angereichert sind,
das komprimierte, wässrige Vielkomponentengemisch weiter erwärmt wird auf 400 bis 550 Grad Celsius und eine dritte Wertstofffraktion 43 abgetrennt wird, in der Phosphat und Ammonium angereichert sind,
das komprimierte, wässrige Vielkomponentengemisch in dem Reaktor 8 auf maximal 700 Grad Celsius erwärmt, und 1 bis 5 Minuten, vorzugsweise 2 bis 3 Minuten bei dieser Temperatur und einem Druck von 25 bis 30 MPa in dem Reaktor 8 verbleibt und anschließend das gebildete Reaktionsprodukt dadurch abgekühlt wird, dass es in einen oder mehrere Wärmetauscher 4 geleitet wird und abgekühltes Reaktionsprodukt mit einer Temperatur von weniger als 50 Grad Celsius, vorzugsweise weniger als 30 Grad Celsius auf einen Druck von weniger als 1 MPa, vorzugsweise weniger als 0,5 MPa entspannt und dadurch das Reaktionsprodukt in Synthesegas 45 und Wasser 46 getrennt und das Synthesegas 45 und das Wasser 46 getrennt aufgefangen werden, und dann gegebenenfalls das Wasser mit Fällungsmittel 32 versetzt und eine vierte Wertstofffraktion 44, in der Phosphat und Ammonium angereichert sind, mittels eines Abscheiders 4 abgetrennt wird.

Vorzugsweise wird bei dem Verfahren das gebildete Reaktionsprodukt mittels Produktleitung 13 durch einen Wärmetauscher 4 zur Erwärmung von komprimiertem, wässrigem Vielkomponentengemisch auf 400 bis 550 Grad Celsius geleitet wird, über Produktleitung 13 in einen zweiten Wärmetauscher 4 zur Erwärmung von komprimiertem, wässrigem Vielkomponentengemisch auf 300 bis 400 Grad Celsius geleitet wird, über Produktleitung 14 in einen weiteren Wärmetauscher 4 zur Erwärmung von komprimiertem, wässrigem Vielkomponentengemisch auf 200 bis 300 Grad geleitet und das Reaktionsprodukt dadurch abgekühlt wird.

Um eine Verstopfung der Pumpe 3 zu verhindern, werden die Komponenten in dem wässrigen Vielkomponentengemisch vor der Kompression auf 25 bis 35 MPa in Partikel mit einem mittleren Durchmesser kleiner als 5 mm, vorzugsweise kleiner als 3 mm, besonders bevorzugt kleiner als 2 mm oder 1 mm zerkleinert werden. Hierzu kann eine Schneidevorrichtung 2 verwendet werden.

Das erfindungsgemäße Verfahren kann mit einer Vorrichtung umfassend einen Vorlagenbehälter 1, eine Schneidevorrichtung 2, eine Pumpe 3, mindestens drei Wärmetauscher 4, Abscheider 5 zur Abtrennung der Wertstofffraktionen, Ventile 6, mindestens einen Reaktor 8 mit Überhitzer 7, Demister 9, Abscheidebehälter 10, Synthesegasleitung 11, Eduktleitung 12, Produktleitung 13, Kühler 14, Gasspeicher 15, Kreislaufwasserleitung 16, Stromerzeuger 17, Leitung für Fällungsmittel 18 durchgeführt werden. Eine Vorrichtung zur Durchführung des erfindungsgemäßen Verfahrens. kann einen Vorlagenbehälter 1, eine Schneidevorrichtung 2, eine Pumpe 3, mindestens drei Wärmetauscher 4, Abscheider 5 zur Abtrennung der Wertstofffraktionen, Ventile 6, mindestens einen Reaktor 8 mit Überhitzer 7, Demister 9, Abscheidebehälter 10, Synthesegasleitung 11, Eduktleitung 12, Produktleitung 13, Kühler 14, Gasspeicher 15, Kreislaufwasserleitung 16, Stromerzeuger 17, Leitung für Fällungsmittel 18 umfassen, dadurch gekennzeichnet, dass das Reaktionsprodukt, das bei der Erwärmung des komprimierten, wässrigen Vielkomponentengemisches auf maximal 700 Grad Celsius im Reaktor 8 gebildet wird, in der Produktleitung 13 zurückgeführt und durch einen Wärmetauscher 4 zur Erwärmung von komprimiertem, wässrigem Vielkomponentengemisch auf 400 bis 550 Grad Celsius geleitet wird, in der Produktleitung 13 in einen zweiten Wärmetauscher 4 zur Erwärmung von komprimiertem, wässrigem Vielkomponentengemisch auf 300 bis 400 Grad Celsius geleitet wird, über Produktleitung 13 in einen weiteren Wärmetauscher 4 zur Erwärmung von komprimiertem, wässrigem Vielkomponentengemisch auf 200 bis 300 Grad geleitet wird.

Weitere Ausführungsformen der Vorrichtungen sind in Figur 1, Figur 2 und Figur 3 beschrieben.

Eine Vorrichtung zur Durchführung des erfindungsgemäßen Verfahrens umfasst einen Vorlagenbehälter 1 zur Aufnahme des wässrigen Vielkomponentengemisches, Eduktleitung 12 zur Führung des wässrigen Vielkomponentengemisches, eine Schneidevorrichtung 2 zur Zerkleinerung des wässrigen Vielkomponentengemisches, eine Pumpe 3 zur Kompression des wässrigen Vielkomponentengemisches, mindestens drei Wärmetauscher 4 zur Erwärmung des komprimierten wässrigen Vielkomponentengemisches auf bis zu 550 Grad Celsius, mindestens drei Abscheider 5 zum Abscheiden der ersten bis dritten Wertstofffraktion 41, 42, 43, Ventile 6 zur Abtrennung der Wertstofffraktionen, Pumpe 3 und Leitung für Fällungsmittel 18 zum Einbringen des Fällungsmittels 32 in den dritten Abscheider 5.

Diese Vorrichtung kann weiterhin umfassen mindestens einen Reaktor 8 mit Überhitzer 7 zur Herstellung des Reaktionsproduktes, Produktleitung 13 zur Führung des Reaktionsproduktes, gegebenenfalls einen Kühler 14 zur Abkühlung des Reaktionsproduktes auf unter 50 Grad Celsius, mindestens ein Ventil 6 zur Expansion des Reaktionsproduktes, mindestens einen Abscheidebehälter 10 mit Demister 9 zur Abtrennung des Synthesegases 45, Synthesegasleitung 11 zur Überführung des Synthesegases 45 für eine weitere Verwendung, gegebenenfalls einen Gasspeicher 15 zur Zwischenlagerung des Synthesegases 45.

Diese Vorrichtung kann weiterhin umfassen einen vierten Abscheider 5, mindestens eine Pumpe 3 und Leitung für Fällungsmittel 18 zum Einbringen des Fällungsmittels 18 in den vierten Abscheider 5 zum Abscheiden der vierten Wertstofffraktion 44, gegebenenfalls einen weiteren Abscheider 5 zum Abscheiden der vierten Wertstofffraktion 44, gegebenenfalls eine Kreislaufwasserleitung 16, gegebenenfalls einen Stromerzeuger 17.

Als Pumpe 3 in der Vorrichtung eignet sich beispielsweise eine Kolbenpumpe. Als Abscheider 4 in der Vorrichtung eignet sich beispielsweise ein Zyklonabscheider. Um die schnelle Erwärmung des komprimierten, wässrigen Vielkomponentengemisches zu erreichen, werden Wärmetauscher 4 verwendet werden.

Der überkritische Zustand des wässrigen Vielkomponentengemisches in dem erfindungsgemäßen Verfahren stellt sich bei Drücken höher als 22,1 MPa und Temperaturen höher 374 Grad Celsius ein. In dem Verfahren werden Drücke von mindestens 25 MPa eingesetzt. Dabei bleibt der Druck in der Anlage vorzugsweise auf dem gleichen Niveau. Dies wird über Ventile 6, insbesondere Druckausgleichsventile gewährleistet. Druckausgleichsventile können sich an einer oder mehreren Stellen der Vorrichtung befinden und darüber der Druckausgleichreguliert und die Beibehaltung des Druckniveaus erreicht werden. Neues Edukt 31 (wässriges Vielkomponentengemisch) wird zugeführt und gebildete Reaktionsprodukte (Wasser 46 und Synthesegas 45) sowie die Wertstofffraktionen 41, 42 und 43 werden abgeführt.

Unter überkritischen Bedingungen verändert sich temperaturabhängig die Ionenlöslichkeit und Wasser wird gleichzeitig vom polaren zum unpolaren Lösungsmittel. Diese Eigenschaft des überkritischen Wassers wird zur fraktionierten Abtrennung (Abscheidung) von Wertstoffen aus wässrigen Vielstoffgemischen benutzt. Wässrige Vielstoffgemische wie Klärschlamm und wässrige organische Abfälle werden so vollständig in ihre Wertstoffbestandteile aufgespalten und die getrennten Fraktionen einer Weiterverwertung im Wertstoffkreislauf zugeführt.

In dem erfindungsgemäßen Verfahren können wässrige Vielstoffgemische in kleinere Wertstofffraktion aufgespalten werden. Die Anreicherung der Wertstofffraktionen erfolgt dann über mehr als drei Stufen, wobei im Verfahren bei einem Druck von mindestens 25 MPa kleinere Temperaturintervalle ausgewählt und die angereicherten Wertstoffe in kleineren Fraktionen abgetrennt werden. Beispielsweise kann die Temperaturerhöhung in 50 Grad Schritten, beginnenden mit 200 Grad Celsius, erhöht werden. Entsprechend werden mehr Wertstofffraktionen, in denen weniger unterschiedliche Wertstoffe enthalten sind, erhalten. Im Grenzfall werden die Temperaturintervalle so gering gewählt, dass einzelne Wertstoffe getrennt voneinander angereichert werden.

Durch die nachfolgenden Figuren wird die Erfindung näher beschrieben. Die Figuren stellen jedoch keine Einschränkung der Erfindung auf diese Ausführungsformen dar.
- Fig. 1: zeigt eine Vorrichtung zur Durchführung des erfindungsgemäßen Verfahrens mit Vorlagebehälter 1, Schneidevorrichtung 2, Pumpe 3, Eduktleitung 12, Wärmetauscher 4, Abscheider 5, Ventil 6, Reaktor 8 mit Überhitzer 7, Produktleitung 13, Kühler/Trockner 14, Gasspeicher 15, Kreislaufwasserleitung 16, Stromerzeuger 17 z.B. Gasturbine, BHKW, Leitung mit Fällungsmittel 18. Edukt 31 wird in den Vorlagenbehälter 1 gefüllt. Die erste Wertstofffraktion 41, die zweite Wertstofffraktion 42, die dritte Wertstofffraktion 43 und die vierte Wertstofffraktion 44 werden über Ventile entnommen. Wasser 46 kann ebenfalls entnommen oder in die Kreislaufwasserleitung 16 eingespeist werden. Synthesegas 45 wird in einem Gasspeicher 15 aufgefangen und über einen Stromerzeuger 17 in Strom 47 umgewandelt. Die Zugabe von Fällungsmittel 32 erfolgt über eine Pumpe 3 und Leitung mit Fällungsmittel 18 nach Abtrennung des Synthesegases 45 aus dem Reaktionsprodukt in der vierten Wertstofffraktion 44.
- Fig. 2: zeigt eine Vorrichtung zur Durchführung des erfindungsgemäßen Verfahrens mit Vorlagebehälter 1, Schneidevorrichtung 2, Pumpe 3, Eduktleitung 12, Wärmetauscher 4, Abscheider 5, Ventil 6, Reaktor 8 mit Überhitzer 7, Produktleitung 13, Kühler/Trockner 14, Gasspeicher 15, Kreislaufwasserleitung 16, Stromerzeuger 17 z.B. Gasturbine, BHKW, Leitung mit Fällungsmittel 18. Edukt 31 wird in den Vorlagenbehälter 1 gefüllt. Die erste Wertstofffraktion 41, die zweite Wertstofffraktion 42, die dritte Wertstofffraktion 43 und die vierte Wertstofffraktion 44 werden über Ventile entnommen. Wasser 46 kann ebenfalls entnommen oder in die Kreislaufwasserleitung 16 eingespeist werden. Synthesegas 45 wird in einem Gasspeicher 15 aufgefangen und über einen Stromerzeuger 17 in Strom 47 umgewandelt. Die Zugabe von Fällungsmittel 32 erfolgt über eine Pumpe 3 und Leitung mit Fällungsmittel 18 in der dritten Wertstofffraktion 43 durch Zugabe des Fällungsmittels zu dem komprimierten Edukt 31 in dem dritten Abscheider 5.
- Fig. 3: zeigt eine Vorrichtung zur Durchführung des erfindungsgemäßen Verfahrens mit Vorlagebehälter 1, Schneidevorrichtung 2, Pumpe 3, Eduktleitung 12, Wärmetauscher 4, Abscheider 5, Ventil 6, Reaktor 8 mit Überhitzer 7, Produktleitung 13, Kühler/Trockner 14, Gasspeicher 15, Kreislaufwasserleitung 16, Stromerzeuger 17 z.B. Gasturbine, BHKW, Leitung mit Fällungsmittel 18. Edukt 31 wird in den Vorlagenbehälter 1 gefüllt. Die erste Wertstofffraktion 41, die zweite Wertstofffraktion 42, die dritte Wertstofffraktion 43 und die vierte Wertstofffraktion 44 werden über Ventile entnommen. Wasser 46 kann ebenfalls entnommen oder in die Kreislaufwasserleitung 16 eingespeist werden. Synthesegas 45 wird in einem Gasspeicher 15 aufgefangen und über einen Stromerzeuger 17 in Strom 47 umgewandelt. Die Zugabe von Fällungsmittel 32 erfolgt über eine Pumpe 3 und Leitung mit Fällungsmittel 18 in dem Reaktor 8 und Abtrennung der vierten Wertstofffraktion 44 über ein Ventil 6.

In der Beschreibung werden für gleiche und gleichwirkende Teile dieselben Bezugsziffern verwendet.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichen

Vorrichtung zur Durchführung des Verfahrens:
   - 1: Vorlagebehälter
   - 2: Schneidevorrichtung
   - 3: Pumpe
   - 4: Wärmetauscher
   - 5: Abscheider
   - 6: Ventil
   - 7: Überhitzer
   - 8: Reaktor
   - 9: Demister (Tropfenabscheider)
   - 10: Abscheidebehälter
   - 11: Synthesegasleitung
   - 12: Eduktleitung
   - 13: Produktleitung
   - 14: Kühler/Trockner
   - 15: Gasspeicher
   - 15: Kreislaufwasserleitung
   - 16: Stromerzeuger (Gasturbine/BHKW)
   - 18: Leitung mit Fällungsmittel
Edukte:
   - 31: Edukt, insbesondere wässriges Vielkomponentengemisch
   - 32: Fällungsmittel
Wertstoffe:
   - 41: Erste Wertstofffraktion
   - 42: Zweite Wertstofffraktion
   - 43: Dritte Wertstofffraktion
   - 44: Vierte Wertstofffraktion
   - 45: Synthesegas
   - 46: Wasser
   - 47: Strom

## Patentansprüche

1. Verfahren zur fraktionierten Abscheidung von Wertstoffen aus einem wässrigen Vielkomponentengemisch umfassend die
Kompression des wässrigen Vielkomponentengemisches auf 25 bis 35 MPa, Erwärmung des komprimierten, wässrigen Vielkomponentengemisches auf 200 bis 300 Grad Celsius und Abtrennung einer ersten Wertstofffraktion (41), in der feste Stoffe angereichert sind,
weitere Erwärmung des komprimierten, wässrigen Vielkomponentengemisches auf 300 bis 400 Grad Celsius und Abtrennung einer zweiten Wertstofffraktion (42), in der Metallsalze angereichert sind, weitere Erwärmung des komprimierten, wässrigen Vielkomponentengemisches auf 400 bis 550 Grad Celsius und Abtrennung einer dritten Wertstofffraktion (43), in der Phosphat und Ammonium angereichert sind.

2. Verfahren nach Anspruch 1,
**dadurch gekennzeichnet, dass**
das komprimierte, wässrige Vielkomponentengemisch nach dem Abtrennen der ersten, der zweiten und der dritten Wertstofffraktion (41), (42), (43) in einem Reaktor (8) unter Sauerstoffausschluss für ein bis fünf Minuten auf maximal 700 Grad Celsius erwärmt wird, wobei ein Reaktionsprodukt, dass Synthesegas (45) und Wasser (46) umfasst, gebildet wird.

3. Verfahren nach Anspruch 2,
**dadurch gekennzeichnet, dass** das Reaktionsprodukt in eine Produktleitung (13) geleitet und die Produktleitung (13) mit dem Reaktionsprodukt durch einen Wärmetauscher (4) geführt wird, in dem Wärmeenergie von dem Reaktionsprodukt auf komprimiertes wässriges Vielkomponentengemisch übertragen wird, wodurch das komprimierte wässrige Vielkomponentengemisch auf 400 bis 550 Grad Celsius erwärmt wird.

4. Verfahren nach einem der Ansprüche 2 oder 3,
**dadurch gekennzeichnet, dass** das Reaktionsprodukt in einer Produktleitung (13) durch einen zweiten Wärmetauscher (4) geführt wird, in dem Wärmeenergie von dem Reaktionsprodukt auf komprimiertes wässriges Vielkomponentengemisch übertragen wird, wodurch komprimiertes wässriges Vielkomponentengemisch auf 300 bis 400 Grad Celsius erwärmt wird.

5. Verfahren nach einem der Ansprüche 2 bis 4,
**dadurch gekennzeichnet, dass** das Reaktionsprodukt in einer Produktleitung (13) durch einen weiteren Wärmetauscher (4) geführt wird, in dem Wärmeenergie von dem Reaktionsprodukt auf komprimiertes wässriges Vielkomponentengemisch übertragen wird, wodurch komprimiertes wässriges Vielkomponentengemisch auf 200 bis 300 Grad Celsius erwärmt wird.

6. Verfahren nach einem der vorgehenden Ansprüche,
**dadurch gekennzeichnet, dass** zu dem komprimierten wässrigen Vielkomponentengemisch bei einer Temperatur von 400 bis 550 Grad Celsius ein Fällungsmittel (32) zugegeben und die dritte Wertstofffraktion (43) abgeschieden und abgetrennt wird.

7. Verfahren nach einem der vorgehenden Ansprüche,
**dadurch gekennzeichnet, dass** zu dem Reaktionsprodukt ein Fällungsmittel (32) zugegeben und eine vierte Wertstofffraktion (44) abgeschieden und abgetrennt wird.

8. Verfahren nach einem der Ansprüche 6 oder 7,
**dadurch gekennzeichnet, dass** das Fällungsmittel (32) ausgewählt wird aus Mg²⁺ oder Ca²⁺ oder K⁺ oder Mg²⁺ und Ca²⁺ oder Mg²⁺ und K⁺ oder Ca²⁺ und K⁺ oder Mg²⁺ und Ca²⁺ und K⁺ und wobei die Ionen in Form ihrer Salze eingesetzt werden.

9. Verfahren nach einem der vorgehenden Ansprüche,
**dadurch gekennzeichnet, dass** das wässrige Vielkomponentengemisch ausgewählt ist aus Klärschlamm, Biomüll, wässrigem organischem Abfall, industriellem Abfall, kommunalem Abfall, tierischem Abfall, landwirtschaftlichem Abfall, Gartenabfall, Tiermehl, pflanzlichem Abfall, Trester, Flugasche, Klärschlammflugasche, Abfall der Lebensmittelindustrie, Bohrschlamm, Schlamm, Abfall aus Biogasanlagen.

## Claims

1. Process for fractional separation of values from an aqueous multicomponent mixture, comprising the compression of the aqueous multicomponent mixture to 25 to 35 MPa,
heating of the compressed aqueous multicomponent mixture to 200 to 300 degrees Celsius and removal of a first values fraction (41) in which solid substances are enriched,
further heating of the compressed aqueous multicomponent mixture to 300 to 400 degrees Celsius and removal of a second values fraction (42) in which metal salts are enriched,
further heating of the compressed aqueous multicomponent mixture to 400 to 550 degrees Celsius and removal of a third values fraction (43) in which phosphate and ammonium are enriched.

2. Process according to Claim 1,
**characterized in that**
the compressed aqueous multicomponent mixture, after the removal of the first, second and third values fractions (41), (42), (43), is heated in a reactor (8) with exclusion of oxygen to a maximum of 700 degrees Celsius for one to five minutes, forming a reaction product that comprises synthesis gas (45) and water (46).

3. Process according to Claim 2,
**characterized in that** the reaction product is guided into a product conduit (13) and the product conduit (13) containing the reaction product is guided through a heat exchanger (4) in which thermal energy is transferred from the reaction product to compressed aqueous multicomponent mixture, which results in heating of the compressed aqueous multicomponent mixture to 400 to 550 degrees Celsius.

4. Process according to either of Claims 2 and 3,
**characterized in that** the reaction product in a product conduit (13) is guided through a second heat exchanger (4) in which thermal energy is transferred from the reaction product to compressed aqueous multicomponent mixture, which results in heating of compressed aqueous multicomponent mixture to 300 to 400 degrees Celsius.

5. Process according to any of Claims 2 to 4,
**characterized in that** the reaction product in a product conduit (13) is guided through a further heat exchanger (4) in which thermal energy is transferred from the reaction product to compressed aqueous multicomponent mixture, which results in heating of compressed aqueous multicomponent mixture to 200 to 300 degrees Celsius.

6. Process according to any of the preceding claims,
**characterized in that** a precipitant (32) is added to the compressed aqueous multicomponent mixture at a temperature of 400 to 550 degrees Celsius and the third values fraction (43) is separated out and removed.

7. Process according to any of the preceding claims,
**characterized in that** a precipitant (32) is added to the reaction product and a fourth values fraction (44) is separated out and removed.

8. Process according to either of Claims 6 and 7,
**characterized in that** the precipitant (32) is selected from Mg²⁺ or Ca²⁺ or K⁺ or Mg²⁺ and Ca²⁺ or Mg²⁺ and K⁺ or Ca²⁺ and K⁺ or Mg²⁺ and Ca²⁺ and K⁺, and where the ions are used in the form of their salts.

9. Process according to any of the preceding claims,
**characterized in that** the aqueous multicomponent mixture is selected from sewage sludge, biowaste, aqueous organic waste, industrial waste, communal waste, animal waste, agricultural waste, garden waste, animal meal, plant waste, pomace, fly ash, sewage sludge fly ash, waste from the food industry, drilling sludge, sludge, waste from biogas plants.

## Revendications

1. Procédé pour la précipitation fractionnée de matières valorisables à partir d'un mélange aqueux à composants multiples, comprenant
la compression du mélange aqueux à composants multiples à 25 jusqu'à 35 MPa,
le chauffage du mélange aqueux à composants multiples, comprimé, à 200 jusqu'à 300°C et la séparation d'une première fraction de matières valorisables (41) dans laquelle des substances solides sont enrichies,
le réchauffage du mélange aqueux à composants multiples, comprimé, à 300 jusqu'à 400°C et la séparation d'une deuxième fraction de matières valorisables (42) dans laquelle des sels métalliques sont enrichis,
le réchauffage du mélange aqueux à composants multiples, comprimé, à 400 jusqu'à 550°C et la séparation d'une troisième fraction de matières valorisables (43) dans laquelle le phosphate et l'ammonium sont enrichis.

2. Procédé selon la revendication 1, **caractérisé en ce que** le mélange aqueux à composants multiples, comprimé, après la séparation de la première, de la deuxième et de la troisième fraction de matières valorisables (41), (42) et (43), est chauffé dans un réacteur (8) à l'abri de l'oxygène pendant une à cinq minutes à au maximum 700°C, un produit réactionnel, qui comprend du gaz de synthèse (45) et de l'eau (46), étant formé.

3. Procédé selon la revendication 2, **caractérisé en ce que** le produit réactionnel est guidé dans une conduite à produit (13) et la conduite à produit (13) comprenant le produit réactionnel passe à travers un échangeur thermique (4) dans lequel l'énergie thermique est transférée du produit réactionnel au mélange aqueux à composants multiples, comprimé, suite à quoi le mélange aqueux à composants multiples, comprimé, est chauffé à 400 jusqu'à 550°C.

4. Procédé selon l'une quelconque des revendications 2 ou 3, **caractérisé en ce que** le produit réactionnel est guidé dans une conduite à produit (13) à travers un deuxième échangeur thermique (4) dans lequel l'énergie thermique est transférée du produit réactionnel au mélange aqueux à composants multiples, comprimé, suite à quoi le mélange aqueux à composants multiples, comprimé, est chauffé à 300 jusqu'à 400°C.

5. Procédé selon l'une quelconque des revendications 2 à 4, **caractérisé en ce que** le produit réactionnel est guidé dans une conduite à produit (13) à travers un autre échangeur thermique (4) dans lequel l'énergie thermique est transférée du produit réactionnel au mélange aqueux à composants multiples, comprimé, suite à quoi le mélange aqueux à composants multiples, comprimé, est chauffé à 200 jusqu'à 300°C.

6. Procédé selon l'une quelconque des revendications précédentes, **caractérisé en ce qu'**un agent de précipitation (32) est ajouté au mélange aqueux à composants multiples, comprimé, à une température de 400 jusqu'à 550°C et la troisième fraction de matières valorisables (43) est précipitée et séparée.

7. Procédé selon l'une quelconque des revendications précédentes,
**caractérisé en ce qu'**un agent de précipitation (32) est ajouté au produit réactionnel et une quatrième fraction de matières valorisables (44) est précipitée et séparée.

8. Procédé selon l'une quelconque des revendications 6 ou 7, **caractérisé en ce que** l'agent de précipitation (32) est choisi parmi Mg²⁺ ou Ca²⁺ ou K⁺ ou Mg²⁺ et Ca²⁺ ou Mg²⁺ et K⁺ ou Ca²⁺ et K⁺ ou Mg²⁺ et Ca²⁺ et K⁺ et les ions étant utilisés sous forme de leurs sels.

9. Procédé selon l'une quelconque des revendications précédentes, **caractérisé en ce que** le mélange aqueux à composants multiples est choisi parmi les boues résiduaires, les déchets biologiques, les déchets organiques aqueux, les déchets industriels, les déchets urbains, les déchets animaux, les déchets agricoles, les déchets de jardin, les farines animales, les déchets végétaux, les drèches, les cendres volantes, les cendres volantes de boues résiduaires, les déchets de l'industrie alimentaire, les boues de forage, les boues, les déchets d'installations de biogaz.
